# EUROPEAN PATENT SPECIFICATION

(11) **EP 4 289 991 B1**
(45) Date of publication and mention of the grant of the patent: **18.06.2025**
(21) Application number: 23204985.8
(22) Date of filing: 02.02.2017
(51) Int. Cl.: C25B 1/04, F24C 9/00, C25B 9/19, C25B 9/73, C25B 15/02, F24C 3/00, F24C 7/08

(54) **INDUSTRIAL COOKING SYSTEM FOR PROVIDING HEAT IN A MANUFACTURING PROCESS**
INDUSTRIELLES KOCHSYSTEM FÜR DIE WÄRMEVERSORGUNG IN EINEM HERSTELLUNGSPROZESS
SYSTÈME DE CUISSON INDUSTRIEL POUR FOURNIR DE LA CHALEUR DANS UN PROCESSUS DE FABRICATION

(30) Priority: 03.02.2016 IN 201631003869
(43) Date of publication of application: 13.12.2023
(62) Divisional of application: 17748108.2
(73) Proprietor: Strong Force Iot Portfolio 2016, LLC, Fort Lauderdale, FL 33301 (US)
(72) Inventor: DESAI, Mehul, Oak Brook, Illinois 60523 (US); GOPAL, Vimal M., Kerala Punithura 682038 (IN); MOHAN, Nithin, Kerala Kochi 682304 (IN); VALAPPIL, Vijeesh Thattante, Kerala Kozhikode 673303 (IN); HABEEBULLA, Riswin Mangarathayyil, Kerala Karuvelippady 692006 (IN); SHRIDHAR, Praveen, Kerala Edapally 682024 (IN); TP, Sanoj Sen, Kerala Kochi 682020 (IN); KM, Nabeel, Kerala Malapuram 676504 (IN); CELLA, Charles, Pembroke, Massachusetts 02359 (US); MAJEED, Thaher, Kerala Ernakulam 683102 (IN)
(74) Representative: Kransell & Wennborg KB

(56) References cited:
- ES-U- 1 099 630
- US-A1- 2007 179 672

## Description

### Background

This disclosure relates to the field of heating.

With the emergence of the Internet of Things ("IoT"), opportunities exist for unlocking value surrounding a wide range of devices. To date, such opportunities have been limited for many users, particularly in rural areas of developing countries, by the absence of robust energy and communications infrastructure. The same problems with infrastructure also limit the ability of users to access more basic features of certain devices, for example, rather than using modern cooking systems, such as with gas burners, many rural users still cook over fires, using wood or other biofuel. A need exists for devices that meet basic needs, such as for modern cooking capability, without reliance on infrastructure, and an opportunity exists to expand the capabilities of basic cooking devices to provide a much wider range of capabilities that will serve other needs and provide other benefits to users of cooking devices.

Many industrial environments are similarly isolated from conventional energy and communications infrastructure. For example, offshore drilling platforms, industrial mining environments, pipeline operations, large-scale agricultural environments, marine exploration environments (e.g., deep ocean exploration), marine and other large-scale transportation environments (such as ships, boats, submarines, aircraft and spacecraft) are often entirely isolated from the traditional power grid, or require very expensive power transmission cables to receive power from traditional sources. Other industrial environments are isolated for other reasons, such as to maintain "clean room" isolation during semi-conductor manufacturing, pharmaceutical preparation, or handling of hazardous materials, where interfaces like outlets and switches for delivering conventional power potentially provide points of penetration or escape for contaminants or biologically active materials. For these environments, a need exists for cooking systems that provide improved independence from conventional power sources. Also, in many of these environments fire is a significant hazard, among other things because of the presence of fire hazards and significant restrictions on egress for personnel. In those cases, storage of fuel for cooking in an environment presents a risk, because the fuel can exacerbate the extent of a fire, potentially resulting in disastrous consequences. Accordingly, such platforms and environments, such as oil drilling platforms, may use diesel generators to power cooking and other systems, because diesel is perceived as presenting lower risk than propane, gasoline, or other fuel sources; however, diesel fuel also burns and remains a significant hazard. A need exists for safer mechanisms for providing cooking capability in isolated industrial environments. ES 1 099 630 U discloses a household hydrogen combustion equipment with at least one electrolysis unit, a storage tank and at least one hydrogen burner connected to the hydrogen storage tank.

### Summary

Intelligent cooking systems are disclosed herein, including an intelligent cooking system that is provided with processing, communications, and other information technology components, for remote monitoring and control and various value-added features and services, embodiments of which use an electrolyser, optionally a solar-powered electrolyser, to produce hydrogen as an on-demand fuel stream for a heating element, such as a burner, of the cooking system.

Embodiments of cooking systems disclosed herein include ones for consumer and commercial use, such as for cooking meals in homes and in restaurants, which may include various embodiments of cooktops, stoves, toasters, ovens, grills and the like. Embodiments of cooking systems also include industrial cooking systems, such as for heating, drying, curing, and cooking not only food products and ingredients, but also a wide variety of other products and components that are manufactured in and/or used in the industrial environments. These may include systems and components used in assembly lines (such as for heating, drying, curing, or otherwise treating parts or materials at one stage of production, such as to treat coatings, polymers, or the like that are coated, dispersed, painted, or otherwise disposed on components), in semi-conductor manufacturing and preparation (such as for heating or curing layers of a semi-conductor process, including in robotic assembly processes), in tooling processes (such as for curing injection molds and other molds, tools, dies, or the like), in extrusion processes (such as for curing, heating or otherwise treating results of extrusion), and many others. These may also include systems and components used in various industrial environments for servicing personnel, such as on ships, submarines, offshore drilling platforms, and other marine platforms, on large equipment, such as on mining or drilling equipment, cranes, or agricultural equipment, in energy production environments, such as oil, gas, hydro-power, wind power, solar power, and other environments. Accordingly, while certain embodiments are disclosed for specific environments, references to cooking systems should be understood to encompass any of these consumer, commercial and industrial systems for cooking, heating, curing, and treating, except where context indicates otherwise.

Provided herein is an intelligent cooking system leveraging hydrogen technology plus cloud-based value-added-services derived from profiling, analytics, and the like. The smart hydrogen technology cooking system provides a standardized framework enabling other intelligent devices, such as smart-home devices and IoT devices to connect to the platform to further enrich the overall intelligence of contextual knowledge that enables providing highly relevant value-added-services. The intelligent cooking system device (referred to herein in some cases as the "cooktop"), may be enabled with processing, communications, and other information technology components and interfaces for enabling a variety of features, benefits, and value added services including ones based on user profiling, analytics, remote monitoring, remote processing and control, and autonomous control. Interfaces that allow machine-to-machine or user-to-machine communication with other devices and the cloud (such as through application programming interfaces) enables the cooking system to contribute data that is valuable for analytics (e.g., on users of the cooking system and on various consumer, commercial and industrial processes that involve the cooking system), as well as for monitoring, control and operation of other devices and systems. Through similar interfaces, the monitoring, control and/or operation of the cooking system, and its various capabilities, can benefit from or be based on data received from other devices (e.g., IoT devices) and from other data sources, such as from the cloud. For example, the cooking system may track its usage, such as to determine when to send a signal for refueling the cooking system itself, to send a signal for re-supplying one or more ingredients, components or materials (such as based on detected patterns of usage of the same over time periods), to determine and provide guidance on usage of the cooking system (such as to suggest training or improvements in usage to improve efficiency or efficacy), and the like. These may include results based on applying machine learning to the use of the fuel, the use of the cooking system, or the like.

In embodiments, the intelligent cooking system may be fueled by a hydrogen generator, referred to herein in some cases as the electrolyser, an independent fuel source that does not require traditional connections to the electrical power grid, to sources of gas (e.g., natural gas lines), or to periodic sources of supply of conventional fuels (such as refueling oil, propane, diesel or other fuel tanks). The electrolyser may operate on a water source to separate hydrogen and oxygen components and subsequently provide the hydrogen component as a source of fuel,
such as an on-demand source of fuel, for the intelligent cooking system. In embodiments, the electrolyser may be powered by a renewable energy source, such as a solar power source, a wind power source, a hydropower source, or the like, thereby providing complete independence from the need for traditional power infrastructure. Methods and systems describing the design, manufacturing, assembly, deployment, and use of an electrolyser are included herein. Among other benefits, the electrolyser allows storage of water, rather than flammable materials like oil, propane and diesel, as a source of energy for powering cooking systems in various isolated or sensitive industrial environments, such as on or in ships, submarines, drilling platforms, mining environments, pipeline environments, exploration environments, agricultural environments, clean room environments, air- and space-craft environments, and others. Intelligent features of the cooking system can include control of the electrolyser, such as remote and/or autonomous control, such as to provide a precise amount of hydrogen fuel (converted from water) at the exact point and time it is required. In embodiments, mechanisms may be provided for capturing and returning products of the electrolyser, such as to return any unused hydrogen and oxygen into water form (or directing them for other use, such as using them as a source of oxygen for breathing).

Methods and systems describing the design, manufacturing, assembly, deployment, and use of a smart hydrogen-based cooking system are included herein. Processing hardware and software modules for operating various capabilities of the cooking system may be distributed, such as having modules or components that are located in sub-systems of the cooking system (e.g., the burners or other heating elements, temperature controls, or the like), having modules or components located in proximity to a user interface for the cooking system (e.g., associated with a control panel), having modules or components located in proximity to a communications port for the cooking system (e.g., an integrated wireless access point, cellular communications chip, or the like, or a docking port for a communications devices, such as a smart phone), having modules or components located in nearby devices, such as other smart devices (e.g., a NEST^{®} thermostat), gateways, access points, beacons, or the like, and/or having modules or components located on servers, such as in the cloud or in a hosted remote control facility.

In embodiments, the cooking system may have a mobile docking facility, such as for docking a smart phone or other control device (such as a specialized device used in an industrial process, such as a processor-enabled tool or piece of equipment), which may include power for charging the smart phone or other device, as well as data communications between the cooking system and the smart phone, such as to allow the smart phone to be used (such as via an app, browser feature, or control feature of the phone) as a controller for the cooking system.

In embodiments, the cooking system may include various hardware components, which may include associated sensors for monitoring operation, processing and data storage capabilities, and communication capabilities. The hardware components may include one or more burners or heating elements, (e.g., gas burners, electric burners, induction burners, convection elements, grilling elements, radiative elements, and the like), one or more fuel conduits, one or more level indicators for indicating fuel level, one or more safety detectors (such as gas leak detectors, temperature sensors, smoke detectors, or the like). In embodiments, a gas burner may include an on demand gas-LPG hybrid burner, which can burn conventional fuel like liquid propane, but which can also burn fuel generated on demand, such as hydrogen produced by the electrolyser. In embodiments, the burner may be a consumer cooktop burner having an appropriate power capability, such as being able to produce 20,000 British Thermal Unit ("BTU").

In embodiments, the cooking system may include a user interface that facilitates intuitive, contextual, intelligence-driven, and personalized experience, embodied in a dashboard, wizard, application interface (optionally including or integrating with one more associated smartphone tablet or browser-based applications or interfaces for one or more IoT devices), control panel, touch screen display, or the like. The user interface may include distributed components as described above for other software and hardware components. The application interface may include interface elements appropriate for cooking foods (such are recipes) or for using the cooking system for various consumer, commercial or industrial processes (such as recipes for making semi-conductor elements, for curing a coating or injection mold, and many others).

Methods and systems describing the design, manufacturing, assembly, deployment and use of a solar-powered hydrogen production facility in conjunction with a hydrogen-based cooking system are included herein.

Methods and systems describing the design, manufacturing, assembly, deployment and use of a commercial hydrogen-based cooking system that is suitable for use in a range of restaurants, cafeterias, mobile kitchens, and the like are included herein.

Methods and systems describing the design, manufacturing, assembly, deployment and use of an industrial hydrogen-based cooking system that is suitable for use as a food cooking system in various isolated industrial environments are included herein.

Methods and systems describing the design, manufacturing, assembly, deployment and use of an industrial hydrogen-based cooking system that is suitable for use as a heating, drying, curing, treating or other cooking system in various industrial environments are included herein, such as for manufacturing and treating components and materials in industrial production processes, including automated, robotic processes that may include system elements that connect and coordinate with the intelligent cooking system, including in machine-to-machine configurations that enable application of machine learning to the system.

Methods and systems describing the design, manufacturing, assembly, deployment and use of a low-pressure hydrogen storage system are described herein. The low-pressure hydrogen storage system may be combined with solar-powered hydrogen generation. In embodiments, the cooking system may receive fuel from the low-pressure hydrogen storage tank, which may safely store hydrogen produced by the electrolyser. In embodiments, the hydrogen may be used immediately upon completion of electrolyzing, such that no or almost no hydrogen fuel needs to be stored.

Methods and systems describing the architecture, design, and implementation of a cloud-based platform for providing value-added-services derived from profiling, analytics, and the like in conjunction with a smart hydrogen-based cooking system are included herein. The cloud-based platform may further provide communications, synchronization among smart-home devices and third parties, security of electronic transactions and data, and the like. In embodiments, the cooking system may comprise a connection to a smart home, including to one or more gateways, hubs, or the like, or to one or more IoT devices. The cooking system may itself comprise a hub or gateway for other IoT devices, for home automation functions, commercial automation functions, industrial automation functions, or the like.

Methods and systems describing an intelligent user interface for a cloud-based platform for providing value-added services ("VAS") in conjunction with a smart hydrogen-based cooking system are included herein. The intelligent user interface may comprise an electronic wizard that may provide a contextual and intelligence driven personalized experience dashboard for computing devices that connect to a smart-home network or a commercial or industrial network based around the smart hydrogen-based cooking system. The architecture, design and implementation of the platform may be described herein.

Methods and systems for configuring, deploying, and providing value added services via a cloud-based platform that operates in conjunction with a smart hydrogen-based cooking system and a plurality of interconnected devices (e.g., mobile devices, Internet servers, and the like) to prepare profiling, analytics, intelligence, and the like for the VAS are described herein. In embodiments, the cooking system may include various VAS, such as ones delivered by a cloud-based platform and/or other IoT devices. For example, among many possibilities, the cooking system may provide recipes, allow ordering of ingredients, components or materials, track usage of ingredients to prompt re-orders, allow feedback on recipes, provide recommendations for recipes (including based on other users, such as using collaborative filtering), provide guidance on operation, or the like. The architecture, design, and implementation of these methods and systems and of the value-added-services themselves may further be described herein.

In embodiments, through a user interface, such as a wizard, various benefits, features, and services may be enabled, such as various cooking system utilities (e.g., a liquid propane gas gauge utility, a cooking assistance utility, a detector utility (such as for leakage, overheating, or smoke, or the like), a remote control utility, or the like). Services for shopping (e.g., a shopping cart or food ordering service), for health (such as providing health indices for foods, and personalized suggestions and recommendations), for infotainment (such as playing music, videos or podcasts while cooking), for nutrition (such as providing personalized nutrition information, nutritional search capabilities, or the like) and shadow cooking (such as providing remote materials on how to cook, as well as enabling broadcasting of the user, such as in a personalized cooking channel that is broadcast from the cooking system, or the like).

Methods and systems for profiling, analytics, and intelligence related to deployment, use, and service of a plurality of hydrogen-based cooking systems that are deployed in a range of environments including urban, rural, commercial, and industrial settings are described herein. Urban settings may include rural villages, low cost housing arrangements, apartments, housing projects, and the like where several end users (e.g., individual households, common kitchens, and the like) may be physically proximal (e.g., apartments in a building, and the like). The physical proximity can facilitate shared access to platform components, such as a hydrolyser or low pressure stored hydrogen, and the like. To the extent that individual cook top deployments may communicate through local or Internet-based network access, additional benefits arise around topics such as, planning for demand loading, and the like. An example may include generating and storing more hydrogen during the week when people tend to cook a home than on the weekend, or using shared information about recipes to facilitate bulk delivery of fresh items to an apartment building, multiple proximal restaurants, and the like. In embodiments, the cooking system may enable and benefit from analytics, such as for
profiling, recording or analyzing users, usage of the device, maintenance and repair histories, patterns relating to problems or faults, energy usage patterns, cooking patterns, and the like.

These methods and systems may further perform profiling, analytics, and intelligence related to deployment, use and service of solar-powered electrolysers that generate hydrogen that is stored in a low-pressure hydrogen storage system.

Methods and systems related to extending the capabilities and access to content and/or VAS of a smart hydrogen-based cooking system through intelligent networking and development of transaction channels are described herein.

Methods and systems of an ecosystem based around the methods and systems of generating hydrogen via solar-powered electrolysers, storing the generated hydrogen in low pressure storage systems, distribution and use of the stored hydrogen by one or more individuals, and the like, are described herein. In embodiments, the cooking system, or a collection of cooking systems, may provide information to a broader business ecosystem, such as informing suppliers of foods or other materials or components of aggregate information about usage, informing advertisers, managers and manufacturers about consumption patterns, and the like. Accordingly, the cooking system may comprise a component of a business ecosystem that includes various parties that provide various commodities, information, and devices.

Another embodiment of smart cooking technology described herein may include an intelligent, computerized knob or dial suitable for direct use with any of the cooking systems, probes, single burner and other heating elements, and the like described herein. Such a smart knob or dial may include all electronics and power necessary for independent operation and control of the smart systems described herein.

The invention concerns an industrial cooking system used to provide heat in a manufacturing process. In embodiments, the industrial cooking system is used in at least one of a semi-conductor manufacturing process, a coating process, a molding process, a tooling process, an extrusion process, a pharmaceutical manufacturing process and an industrial food manufacturing process.

In embodiments, a smart knob is adapted to store instructions for a plurality of different cooking systems. In embodiments, a smart knob is configured to initiate a handshake with a cooking system based on which the knob automatically determines which instructions should be used to control the cooking system. In embodiments, a smart knob is configured with a machine learning facility that is configured to improve the control of the cooking system by the smart knob over a period of use based on feedback from at least one user of the cooking system.

In embodiments, a smart knob is configured to initiate a handshake with a cooking system to access at least one value-added service based on a profile of a user.

### Brief Description of the Drawings

Fig. 1 is a diagrammatic view depicting an integrated cooktop of intelligent cooking system methods and systems in accordance with the present teachings.
Fig. 2 is a diagrammatic view depicting a single intelligent burner of the intelligent cooking system in accordance with the present teachings.
Fig. 3 is a partial exterior view depicting a solar-powered hydrogen production and storage station in accordance with the present teachings.
Fig. 4 is a diagrammatic view depicting a low-pressure storage system in accordance with the present teachings.
Fig. 5 and Fig. 6 are cross-sectional views of Fig. 4.
Fig. 7 is a diagrammatic view depicting an electrolyser in accordance with the present teachings.
Fig. 8 is a diagrammatic view depicting features of a platform that interact with electronic devices and participants in a related ecosystem of suppliers, content providers, service providers, and regulators in accordance with the present teachings.
Fig. 9 is a diagrammatic view depicting a smart home embodiment of the intelligent cooking system in accordance with the present teachings.
Fig. 10 is a diagrammatic view depicting a hydrogen production and use system in accordance with the present teachings.
Fig. 11 is a diagrammatic view depicting an electrolytic cell in accordance with the present teachings.
Fig. 12 is a diagrammatic view depicting a hydrogen production system integrated into a cooking system in accordance with the present teachings.
Fig. 13 is a diagrammatic view depicting auto switching connectivity in the form of ad hoc Wi-Fi from the cooktop through nearby mobile devices in a normal connectivity mode when Wi-Fi is available in accordance with the present teachings.
Fig. 14 is a diagrammatic view depicting an auto switching connectivity in the form of ad hoc Wi-Fi from the cooktop through nearby mobile devices for ad hoc use of the local mobile devices for connectivity to the cloud in accordance with the present teachings.
Fig. 15 is a perspective view depicting a three-element induction smart cooking system in accordance with the present teachings.
Fig. 16 is a perspective view depicting a single burner gas smart cooking system in accordance with the present teachings.
Fig. 17 is a perspective view depicting an electric hot plate smart cooking system in accordance with the present teachings.
Fig. 18 is a perspective view depicting a single induction heating element smart cooking system in accordance with the present teachings.
Figs. 19-26 are views of visual interfaces depicting user interface features of a smart knob in accordance with the present teachings.
Fig. 27 is a perspective view depicting a smart knob deployed on a single heating element cooking system in accordance with the present teachings.
Fig. 28 is a partial perspective view depicting a smart knob deployed on a side of a kitchen appliance for a single heating element cooking system in accordance with the present teachings.
Figs. 29-32 are perspective views depicting smart temperature probes of the smart cooking system in accordance with the present teachings.
Figs. 33-38 are diagrammatic views depicting different docks for compatibility with a range of smart phone and tablet devices in accordance with the present teachings.
Fig. 39 and Fig. 41 are diagrammatic views depicting a burner design contemplated for use with a smart cooking system in accordance with the present teachings.
Fig. 40 is a cross-sectional view of Fig. 39.
Fig. 42, Fig. 44, and Fig. 46 are diagrammatic views depicting a burner design contemplated for use with a smart cooking system in accordance with another example of the present teachings.
Fig. 43 and Fig. 45 are cross-sectional views of Fig. 42 and Fig. 44, respectively.
Fig. 47, Fig. 48, and Fig. 49 are diagrammatic views depicting a burner design contemplated for use with a smart cooking system in accordance with a further example of the present teachings.
Fig. 50, Fig. 51, and Fig. 52 are diagrammatic views depicting a burner design contemplated for use with a smart cooking system in accordance with yet another example of the present teachings.
Fig. 53 and Fig. 55 are diagrammatic views depicting a burner design contemplated for use with a smart cooking system in accordance with an additional example of the present teachings.
Fig. 54 is a cross-sectional view of Fig. 53.
Fig. 56 is a flowchart depicting a method associated with a smart kitchen including a smart cooktop and an exhaust fan that may be automatically turned on as water in a pot may begin to boil in accordance with the present teachings.

### Detailed Description

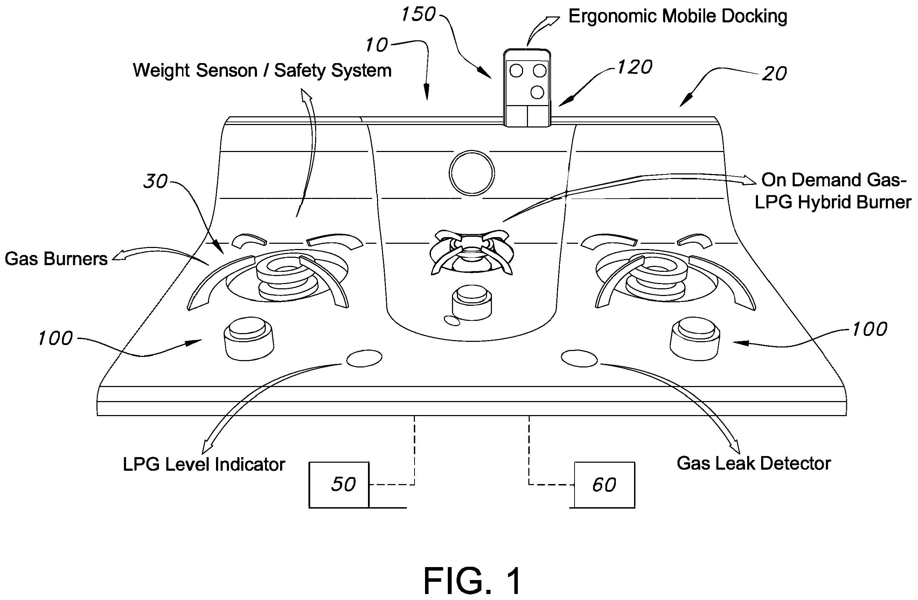

Referring to Fig. 1, an integrated cooktop embodiment 10 of the intelligent cooking system methods and systems 20 described herein is depicted. The cooktop embodiment 10 of Fig. 1, may include one or more burners 30 that may burn one or more types of fuel, such as Liquid Propane Gas (LPG), hydrogen, a combination thereof, and the like. Gas burners may, for example, be rated to provide variable heat, including up to a maximum heat, thereby consuming a corresponding amount of fuel. One or more of the burners 30 may operate with an LPG source 50 and a source of hydrogen gas 60 such that the hydrogen source 60 may be utilized based on a demand for fuel indicated by the burner 30, a measure of available LPG fuel, an amount of LPG fuel used over time, and any combination of use, demand, historical usage, anticipated usage, availability of supply, weather conditions, calendar date/time (e.g., time of day, week, month, year, and the like), proximity to an event (e.g., an intense cooking time, such as just before a holiday), and the like. The hydrogen source 60 may be utilized so that the amount of other fuel used, such as LPG, is kept below a usage threshold. Such a usage threshold may be based on costs of LPG gas, uses of LPG gas by other burners 30 in the cooking system 20, other cooking systems 20 in the vicinity (e.g., other cooking systems 20 in a restaurant, other cooking systems 20 in nearby residences), and the like. Each cooking system 20 and/or burner 30 within the cooking system 20 may therefore provide on-demand fuel sourcing dynamically without need for user input or monitoring of the cooking system 20. By automating fuel sourcing, the burner may extend the life of available LPG by automatically introducing the hydrogen fuel, such as by switching from one source to the other or by reducing one source (e.g., LPG) while increasing the other (e.g., hydrogen). The degree to which each fuel source is utilized may be based on a set of operational rules that target efficiency, LPG fuel consumption, availability of hydrogen, and the like. Rating of the one or more burners 30 may be under the control of a processor, including to provide different levels of rating for different fuel sources, such as LPG alone, hydrogen alone, or a mixture of LPG and hydrogen with a given ratio of constituent parts.

Each of the burners 30, cooking systems 20, or collection of cooking systems 20 may be configured with fuel controls, such as fuel mixing devices (e.g., valves, shunts, mixing chambers, pressure compensation baffles, check valves, and the like) that may be controlled automatically based, at least in part on some measure of historical, current, planned, and/or anticipated consumption, availability, and the like. In an example, one or more burners 30 may be set to produce 1000W of heat and a burner gas source control facility may activate one or more gas mixing devices while monitoring burner output to ensure that the burner output does not deviate from the output setting by more than a predefined tolerance, such as 100W or ten percent (10%). Alternatively, a model of gas consumption and burner output, embodied in a software module that may have access to data sources regarding types of gas, burning characteristics, types of burners, rating characteristics, and the like, may be used by the control facility to regulate the flow of one or more of gasses being mixed to deliver a consistent burner heat output. Any combination of burner output sensing, modeling, and preset mixing control may be used by the control facility when operating fuel sourcing and/or mixing devices.

The one or more burners 30 may include intelligence for enhancing operation, efficiency, fuel conservation, and the like. Each of the burners 30 may have its own control facility 100. A centralized cooking system control facility may be configured to manage operation of the burners 30 of the cooking system 20 or other heating elements noted throughout this disclosure. Alternatively, the individual burner control facilities 100 may communicate over a wired and/or wireless interface to facilitate combined cooking system burner control. One or more sensors to detect presence of an object in the targeted heating zone (e.g., disposed on the burner grate) may provide feedback to the control facility. Object presence sensors may also provide an indication of the type, size, density, material, and other aspect of the detected object in the targeted heating zone. Detection of a material such as metal, versus cloth (e.g., a person's sleeve), versus human flesh may facilitate efficiency and safety. When cloth or human flesh is detected, the control facility may inhibit heat production so as to avoid burning the person's skin or causing their clothing to catch fire. Such a control facility safety feature may be over ridden through user input to the control facility to give the user an opportunity to determine if the inhibited operation is proper. Other detectors, such as spill over (e.g., moisture) detectors in proximity to the burner may help in managing safety and operation. A large amount of spillage from a pot may cause the flame being produced by the burner to be extinguished. Based on operational rules, the source of gas may be disabled and/or an igniter may be activated to resume proper operation of the burner. Other actions may also be configured into the control facility, such as signaling the condition to a user (e.g., through an indicator on the cooking system 20, via connection to a personal mobile device, to a central fire control facility, and the like).

Burner control facilities 100 may control burner heat output (and thereby control fuel consumption) based on one or more models of operation, such as to heat a pan, pot, component, material, or other item placed in proximity to the burner 20 or other heating element. As an example, if a user wants to boil water in a heavy metal pot quickly, a control facility may cause a burner to produce maximum heat. Based on user preferences and/or other factors as noted above related to demand, supply, and the like, the control facility may adjust the burner output while notifying the user of a target time for completion of a heating activity (e.g., time until the water in the pot boils). In this way an intelligent burner 20 (e.g., on with a burner control facility) may achieve some user preferences (e.g., heating temperature) while compromising on others (e.g., amount of time to boiling, and the like). The parameters (e.g., operational rules) for such tradeoff may be configured into the cooking system 20 / burner 30 during production, may be adjustable by the user directly or remotely, may be responsive to changing conditions, and the like. In embodiments, machine learning, either embodied at the cooking system 20, in the cloud, or in a combination, may be used to optimize the parameters for given objectives sought by users, such as cooking time, quality of the result (e.g., based on feedback measures about the output product, such as taste in the case of foods or other quality metrics in the case of other products of materials). For example, the cooking system 20 may be configured under control of machine learning to try different heating patterns for a food and to solicit user input as to the quality of the resulting item, so that over time an optimal heating pattern is developed.

The intelligent cooking system 20 as described herein and depicted in Fig. 1 may include an interface port 120 with supporting structural elements to securely hold a personal mobile device 150 (e.g., a mobile phone) in a safe and readily viewable position so that the user can have both visual and at least auditory access to the device. The cooking system 20 may include features that further ensure that the mounted mobile device 150 is not subject to excessive heat, such as heat shields, deflectors, air flow baffles, heat sinks, and the like. A source of air- flow may be incorporated to facilitate moving at least a portion of heated air from one or more of the burners 30 away from a mounted personal mobile device 150.

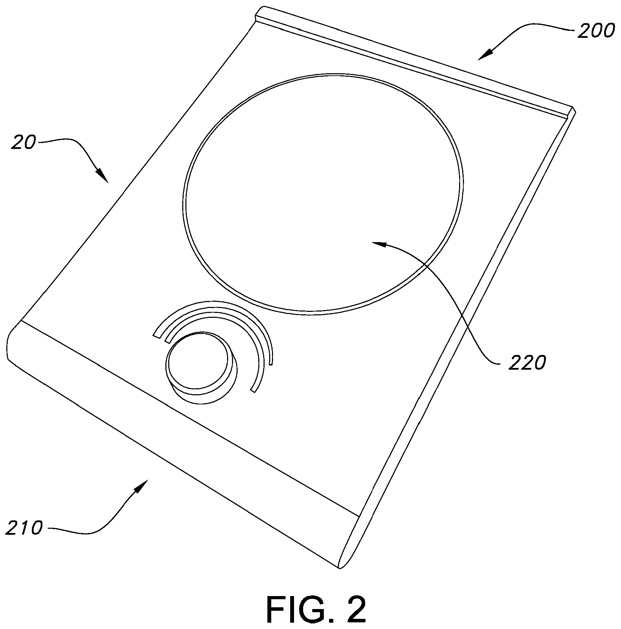

The intelligent burner embodiment 200 depicted in Fig. 2 represents a single burner embodiment 210 of the intelligent cooking system 20 described herein. Any, none, or all features of a multi-burner intelligent cooking system 20 may be configured with the single burner version depicted in Fig. 2. Further depicted in Fig. 2 is a version of the intelligent burner 200 that may have an enclosed burner chamber 220 that provides heat in a target heat-zone as a plane of heat rather than as a volume of heat. This may be generated by induction, electricity, or the like that may be produced by converting a source of fuel, such as LPG and/or hydrogen with a device that can produce electricity from a combustible gas.

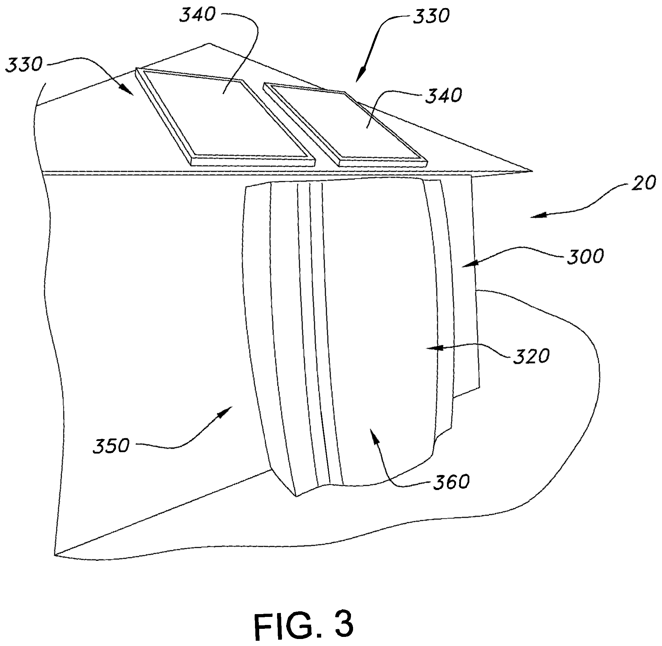

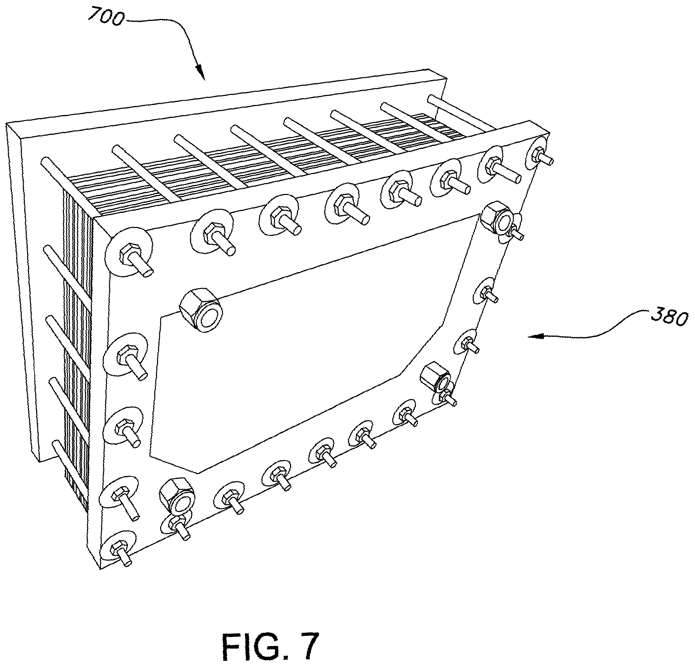

The intelligent cooking system 20 may be combined with a hydrogen generator 300 to provide a source of hydrogen for use with the burners 30 as described herein. Fig. 3 depicts a solar-powered hydrogen production and storage station 320. The hydrogen production station 320 may be configured with one or more solar collectors 330, such as sunlight-to-electricity conversion panels 340 that may produce energy for operating an electrolyser 350 that converts a hydrogen source, such as water vapor, to at least hydrogen and oxygen for storage. Energy from the solar collectors 330 may power one or more electrolysers 350, such as one depicted in the embodiment 700 of Fig. 7. The one or more electrolysers 350 may process water vapor, such as may be available in ambient air, for storage in a storage system 360, such as a low-pressure storage system 370 depicted in Fig. 3. Alternatively, and/or in addition to processing air-born water vapor, a source of water, such as collected rainfall, public water supply, or other source may be processed by the electrolyser 350 to produce hydrogen fuel.

As hydrogen fuel is produced, it may be stored in a suitable storage container, such as the low-pressure storage system 370 that may be configured with the solar-powered electrolyser system 350. The hydrogen produced by the solar-powered electrolyser 350 may be routed to one or more intelligent cooking systems 20 in addition to or in place of being routed to a storage system 360. A hydrogen production and storage system 320 may produce hydrogen based on a variety of conditions including, without limitation, availability of a source of water vapor, availability of power to the electrolyser, an amount of sunlight being collected, a forecast of sunlight, a demand for hydrogen energy, a prediction of demand, based on availability of LPG, usage of LPG, and the like.

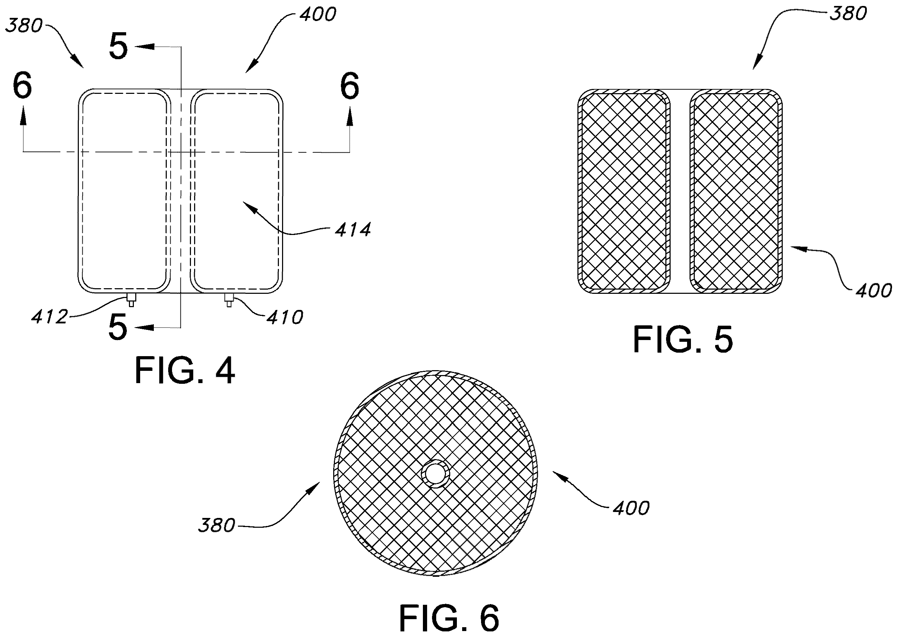

The low-pressure gas storage system 370 may store the hydrogen and oxygen in ultraviolet ("UV") coated plastic bags or through water immersion technology (e.g., biogas). The maximum pressure inside the system may be less than 1.1 bar, which promotes safety, as the pressure is very low. Also, as no compressors are used, the cost for storage is much lower than for active storage systems that store compressed gas. Fig. 4, Fig. 5. and Fig. 6 depict an embodiment 400 of such a low-pressure storage system 370, with an inlet valve 410 and outlet valve 412 providing ports into an interior storage area 414 with the internal volume separated into two parts.

The low pressure set up can directly work from renewable energy, such as solar energy collected by solar cells, wind energy, hydro-power, or the like, improving the efficiency. The selected source of renewable energy may be based on characteristics of the environment; for example, marine industrial environments may have available wind and hydro-power, agricultural environments may have solar power, etc. Also if the renewable energy (e.g. solar energy) collection facility is connected to a power grid, the electricity generated and the energy stored can be provided to the grid, e.g., during high cost periods. Likewise, the grid can be used to restore any used energy during off peak hours at reduced costs.

The designed low-pressure storage can be used to store hydrogen, as a source of energy, that can be converted into electricity. The designed system can store energy at very low cost and may have a lifetime of years, e.g., more than 15 years, which modern batteries don't have. Amounts of storage may be configured to satisfy safety requirements, such as storing little enough to cause a minimal fire hazard as compared to storing larger amounts of other fuels.

In an embodiment, the intelligent cooking system 20 may signal to the electrolyser system 350 a demand for hydrogen fuel. In response, the electrolyser system 350 may direct stored hydrogen to the cooking system 20, begin to produce hydrogen, or indicate that hydrogen is not currently available. This response may be based, at least in part on conditions for producing hydrogen. If conditions for producing hydrogen are good, the electrolyser system may begin to produce hydrogen fuel rather than merely sourcing it from storage. In this way, the contemporaneous demand for hydrogen fuel and an ability to produce it may be combined to determine the operation of the energy production and consumption systems.

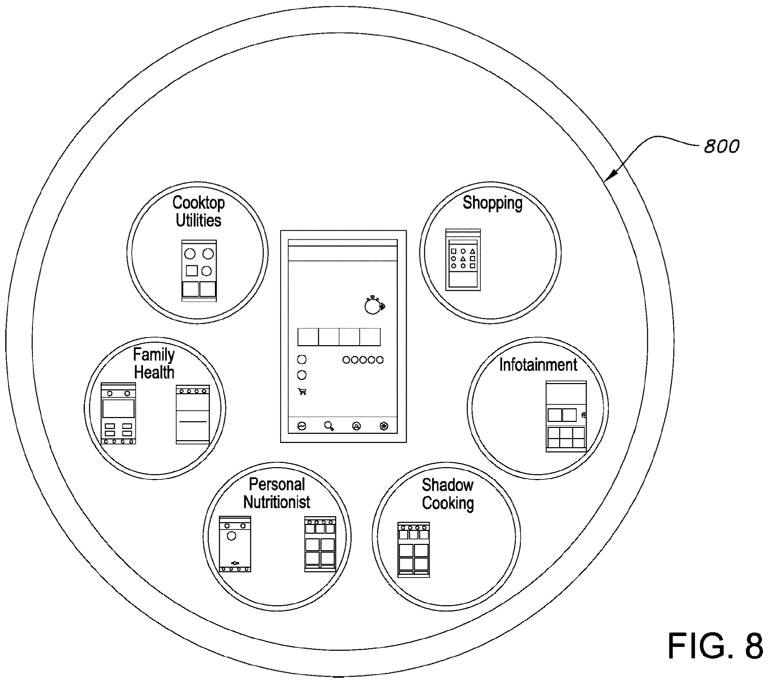

The intelligent cooking system 20 and/or hydrogen production and storage systems described herein may be combined with a platform that interacts with electronic devices and participants in a related ecosystem of suppliers, content providers, service providers, regulators, and the like to deliver VAS to users of the intelligent cooking system 20, users of the hydrogen production system, and other participants in the ecosystem. Certain features of such a platform 800 may be depicted in Fig. 8. The platform 800, which may be a cloud-based platform, may handle cooking system utilities, such as leakage sensing, fuel sourcing, usage assistance, remote control, and the like. In an example, a user who is located remotely from the intelligent cooking system 20 may configure the cooking system 20 to operate at a preset time, or based on a preset condition from his/her computing device (e.g., a personal mobile phone, desktop computer, laptop, tablet, and the like). The user may further be notified when the cooking system 20 begins to operate, thereby ensuring the user that the cooking system 20 is operating as expected. A user or third party (e.g., a regulatory agency, landlord, and the like) may configure one or more present conditions. Such conditions may include a variety of triggers including time, location of a user or third party, and the like. In an example, a parent may want to have a cooking system operate to warm up ingredients based on an anticipated arrival of someone to the home. This anticipation may be based on a detected location of a mobile device being carried by a person whose arrival is being anticipated.

The platform 800 may further connect cooking system users with participants in the ecosystem (e.g., vendors and/or service providers) synergistically so that both the user and the participants may benefit from the platform 800. In an example, a user may plan to prepare a meal for an upcoming dinner. The user may provide the meal plan to the platform 800 (e.g., directly through the user's mobile phone, via the user's intelligent cooking system 20, and the like). The platform 800 may determine that fresh produce for the meal is preferred by the user and may signal to retailers and/or wholesalers to have the produce available for the user to pick up on his/her return to the home to prepare the meal. In this way, vendors and service providers who participate in the ecosystem may gain insight into their customer's needs. Likewise, users may indicate a preference for a type of meal that may be prepared with a variety of proteins. Participants in the ecosystem may make offers to the user to have one or more of the types of protein available for the user on the day and at the time preferred by the user. A butcher that is located in proximity to the user's return path may offer conveniences, such as preparation of cuts of meat for the user. Butchers who may not be conveniently located in proximity to the user' s return path may offer delivery services on a day and time that best complies with the user's meal plans.

A user of such a platform-connected intelligent cooking system may leverage the platform 800 to gain both access to and analysis of information that is available across the Internet to address particular user interests, such as health, nutrition, and the like. As an example, a user may receive guidance from a health professional to reduce red meat intake and increase his seafood intake. The platform 800 may interact with the user, the cooking system, and ecosystem participants to facilitate preparing variations of a family's favorite meals with fish instead of red meat. Changes in spices, amounts, cooking times, recipes, and the like may be provided to the user and to the cooking system 20 through the platform 800 to make meal preparation more enjoyable. The platform 800 may help with nutritional assistance, such as by providing access to quality nutritional professionals who may work personally with a user in meal selection and preparation.

The platform 800 may also help a user of the platform 800, even one who does not have access to the intelligent cooking system 20, to benefit from the knowledge gathering and analysis possible from a platform 800 interconnected with a plurality of cooking systems, users, and ecosystem participants. In an example, the platform 800 may provide guidance to a user in the selection and purchase of an intelligent burner and/or integrated cooking system and related appliances (e.g., refrigeration), utensils, cookware, and the like.

The platform 800 may further facilitate integration with VAS, such as financial services (e.g., for financing infrastructure and operating costs), healthcare services (e.g., facilitating connecting healthcare providers with patients at home), smart home solutions (e.g., those described herein), rural solutions (e.g., access to products and services by users in rural jurisdictions), and the like. Information (e.g., profiles, analytics, and the like) gathered and/or generated by the platform 800 may be used for other business services either directly with or through other partners (e.g., credit rating agencies for developing markets).

The platform 800 may facilitate a range of user benefits, including shopping, infotainment, business development, and the like. In a business development example, a user may utilize her intelligent integrated cooking system 20 to produce her own cooking show by setting up her personal phone with camera on the cooking system 20 so that the user activity on the cooking system 20 can be captured and/or distributed to other users via the platform 800. Further in the example, a user may schedule a cooking demonstration and may allow other users to cook along with him in an autonomous and/or interactive way. A user may opt into viewing and cooking along with the cooking show producer without directly interacting with the producer. Whereas, another user may configure his cooking system 20 with a personal mobile device and allow others to provide feedback based on the user's activities on the cooking system 20 via the camera and user interface of the mobile device.

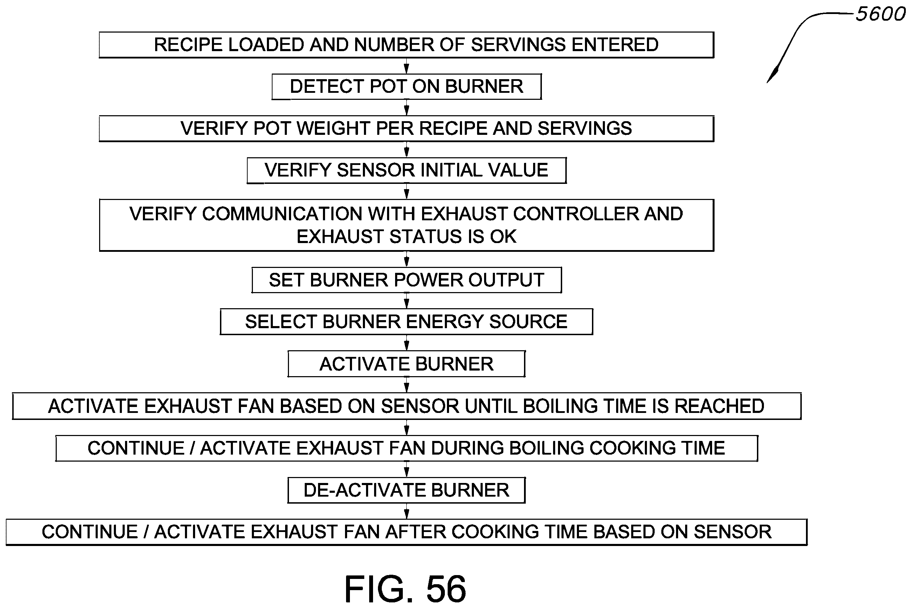

The platform 800 may facilitate establishing an IoT ecosystem of smart home devices, such as, in embodiments, a smart kitchen that enables and empowers the homemaker. The smart kitchen may include a smart cooking system 20, IoT middleware and a smart kitchen application. The smart cooking system 20 may provide a hardware layer of the platform 800 that may provide plug and play support for IoT devices, with each new device acting as a node providing more information, such as from additional sensors, to the entire system. IoT cloud support, which may be considered as a middleware layer of the platform 800, may enable the communication (such as by streaming) and storage of data on the cloud, along with enabling optional remote management of various capabilities the platform 800. A smart kitchen application may include a user interface layer that may provide a single point of access and control for the entire range of smart devices for the ease of the homemaker or other user. As an example of a smart kitchen enabled by the smart cook top methods and systems described herein, an exhaust fan may be turned on as the water in a pot begins to boil, thereby directing the steam output of the pot away from the kitchen. This may be done through a combination of sensors (e.g., a humidity sensor), automated cooking system control that determines when the pot will begin to boil based on the weight of the pot on the burner, and the energy level of the burner, and the like. Similar embodiments may be used in industrial environments, such as coordination with ventilation systems to maintain appropriate temperature, pressure, and humidity conditions by coordination of heating activities via the cooking system 20 and routing and circulation of air and other fluids by the ventilation system. The cooking system controller may, for example, communicate with an exhaust fan controller to turn on the fan based on these inputs and/or calculations; thereby improving the operation of the smart kitchen appliances while conserving energy through timely application of the exhaust fan. A flow chart representative of operational steps 5600 for this example is depicted in Fig. 56.

The value created by such a platform 800 may be broadly classified into (i) VAS; (ii) profiling, learning and analytics; and (iii) a smart home solution or IoT solution for a commercial or industrial environment. The VAS of the system, may include without limitation: (a) personalized nutrition; (b) information and entertainment (also referred to as "infotainment"); (c) family health; (d) finance and commerce services (including online ordering and shopping); (e) hardware control services; and many other types of services.

Profiling, learning and analytics may provide a number of benefits to various entities. For example, a homemaker may get access to personalized nutrition and fitness recommendations to improve the health of the entire family, including healthy recipe and diet recommendations, nutritional supplement recommendations, workout and fitness recommendations, energy usage optimization advice for cooking and use of other home appliances, and the like. Device manufacturers and other enterprises may also benefit, as the platform 800 may solve the problems faced by home appliance device manufacturers in integrating their devices to the cloud and leveraging the conveniences provided by the same.

Device manufacturers and other enterprises may be provided with an interface to the platform 800 (such as by one or more application programming interfaces, graphical user interfaces, or other interfaces) that can enable them to leverage capabilities of the platform 800, including, one or more machine learning algorithms or other analytic capabilities that can learn and develop insights from data generated by the device. These capabilities may include an analytics dashboard for devices; a machine learning plug and play interface for developing data insights; a health status check for connected appliances (e.g., to know when a device turns faulty, such as to facilitate quick and easy replacement/servicing); and user profiling capabilities, such as to facilitate providing recommendations to users, such as based on collaborative filtering to group users with other similar users in order to provide targeted advice, offers, advertisements, and the like.

A smart home solution or IoT solution for a commercial or industrial environment may provide benefits to device manufacturers who find it difficult to embed complex electronics in their devices to make them intelligent due to development and cost constraints. The platform 800 simplifies this by providing a communication layer that can be used by partners to send their device data, after which the platform 800 can take over and provide meaningful data and insights by analyzing the data and performs specific actions on behalf of an integrated smart home for the user. Additional value of each partner interacting through the platform 800 is the access to various sensory data built into the system for effectively making any connected device more intelligent. For example, among many possibilities, the ambient temperature sensor inside the smart cooking system 20 can be leveraged by a controllable exhaust facility to accordingly increase the airflow for the comfort of the homemaker.

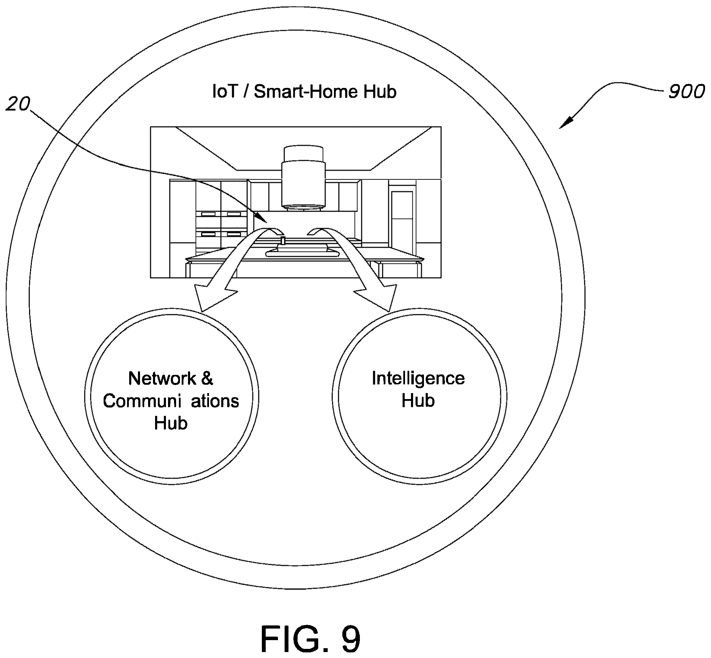

Referring to the smart home embodiment of Fig. 9, an intelligent cooking system 900 may be a participant in or may be a gateway to a home appliance network that may include other kitchen appliances, sensors, monitors, user interface devices, processing devices, and the like. The home appliance network, and/or the devices configured in the home network, may be connected to each other and to other participants of the ecosystem through the platform 800 (Fig. 8). Data collected from these appliances, participants in the ecosystem, users of the platform, third parties, and the like may provide an interactive environment to explore, visualize, and study patterns, such as fuel usage patterns. Data collected may further be synthesized through deep machine learning, pattern recognition, modeling, and prediction analysis to provide valuable insights related to all aspects of the platform participants, devices, suppliers, and the larger ecosystem.

Further embodiments of the hydrogen generation and consumption capabilities are now described.

The system may use water and electricity as fuel to generate the gas-on-demand that may be used, for example, for cooking. The hydrogen and oxygen generated in the cell may be separated out within the cell and kept separate until reaching the combustion port in a burner. A specially designed burner module may comprise different chambers to allow passage of hydrogen, oxygen and cooking gas. The ports for hydrogen and cooking gas may be designed in such a way as to avoid flame flashbacks and flame lift-offs, and the like. The oxygen ports may be designed to ensure optimum supply of oxygen with respect to the hydrogen supply. The hydrogen and oxygen ports may be on mutually perpendicular planes ensuring proper intermixing of the burning mixture. The hydrogen and cooking gas connections may be mutually independent and can be operated separately or together to generate a mixed flame.

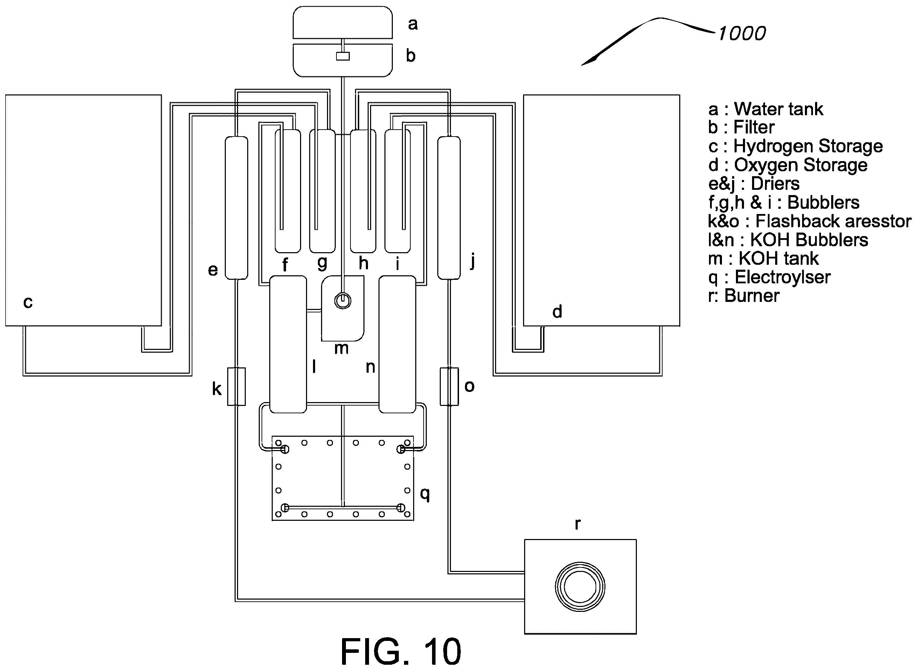

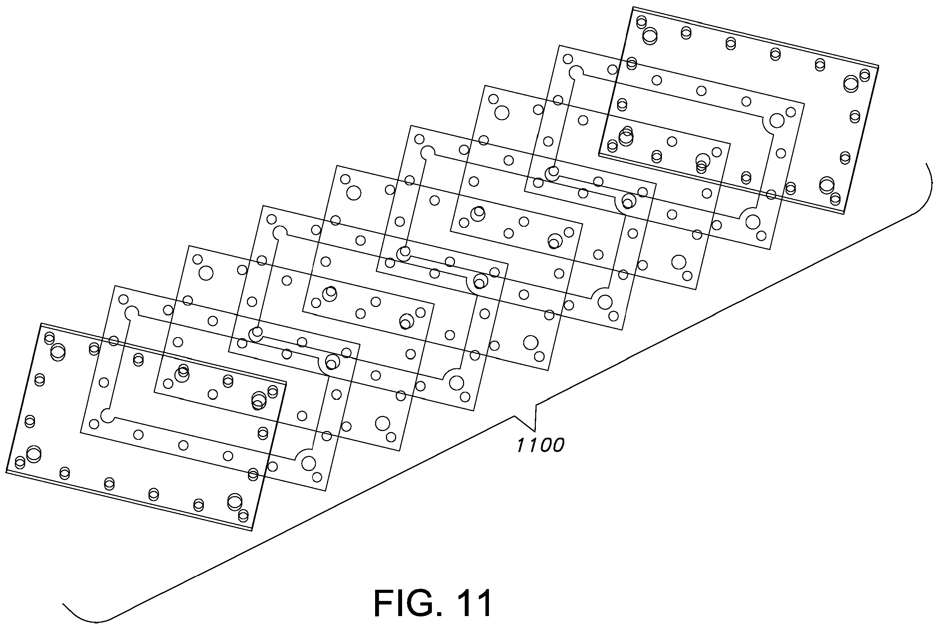

A hydrogen production and use system 1000 as disclosed herein may comprise one or more of the following elements as depicted in Figs. 10 and 11. An electrolytic cell 1100 is detailed in Fig. 11, which shows an exploded view of the cell consisting of steel electrodes separated by nylon membranes inside polyvinyl chloride ("PVC") gaskets sandwiched by acrylic sheets. The cell may comprise an alkaline electrolytic cell that separates water into its constituent components of hydrogen and oxygen. A mixture tank, such as a concentrated alkaline mixture tank may serve as the electrolyte source for the electrolytic cell. The alkali mixture may be prepared by mixing a base like potassium hydroxide ("KOH") or sodium hydroxide ("NaOH") with water. In case of KOH, in embodiments the concentration may be around 20%. The membrane for separation of gases within the cell may be made from a variety of materials. One such material is a nylon sheet with catalyst coating that has enough thread count to allow ion transfer and minimal gas transfer. The electrodes used may be, for example, stainless steel or nickel coated stainless steel. Also provided may be gas bubbling tanks. The hydrogen and oxygen generated from the electrolytic cells may be passed through gas bubbling tanks. The tanks may be made with recirculation or non-recirculation modes. In a non-recirculation mode, the gas is bubbled through water and any impurity in the gas gets purified in the process. In recirculation mode, the gas is bubbled through KOH solution, which may be identical in concentration to the alkaline mixture tank. In this methodology, any additional electrolyte that flows out with the gas gets re-circulated into the alkaline mixture tank. The two bubbling tanks may be connected together, such as at the bottom, to ensure pressure maintenance across them. Dehumidifiers may also be included. The gas passed through the
bubblers may have excess moisture content that reduces the combustion efficiency. Hence, the gas may be passed through dehumidifiers, which can use a desiccant, water-gas separator membranes, or other dehumidification technologies, or a combination thereof, to reduce the humidity content of the gas. A hydrogen burner arrangement is provided wherein a conventional hydrogen burner, as known in the art, may be connected to the dehumidifier, such as through a flashback arrestor. In embodiments, there are no ports for air intake, as combustion of the hydrogen-air mixture may result in an elevated concentration of mono-nitrogen oxides ("NOx"), which in turn may result in a potential for flame flashback. The burner ports may have a small diameter, such as lower than 0.5mm, to reduce the chance of any flame flashback. The ports may be aligned in such a way as to cross-ignite, resulting in combustion of the complete gas supply with a single spark. The hydrogen concentration throughout the supply line may be above the maximum combustion limit, and hence there is little safety hazard. The oxygen supply may be through a channel that is completely separate from the hydrogen one. The oxygen ports may be located on a plane perpendicular to the hydrogen ports to ensure proper mixing of the combustion mixture. Above the burner, a catalyst may be placed so as to lower the temperature of combustion, reducing the concentration of NOx generated. An economically feasible high temperature catalyst mesh may be used to lower the temperatures of combustion.

The power supply may supply a desired voltage that may be optimized according to the conditions of the system, such as the water temperature, pressure, etc. The voltage per cell may vary, such as from 1.4 v to 2.3 v, and the current density may be as low as 44 mA/cm2 for maximum efficiency. As the current density is low, the efficiency tends to be high.

An LPG/cooking gas burner arrangement may be provided. The LPG/ cooking gas burner arrangement may be added to the hydrogen burner arrangement. In embodiments, the system may be similar to a closed top burner arrangement, where the burner ports are along the sides of the burner and the flame fueled by the LPG surrounds the hydrogen flame. In embodiments, the gas supply channel may be kept separate from the hydrogen supply channel and the oxygen supply channel and would hence pose no safety risk in that regard. In alternative embodiments, the fuels may be mixed, such as under control of a processor.

A renewable energy connection may be provided. In embodiments, the whole system, including the storage system, may be connected to renewable energy sources like solar power, wind power, water power, or the like. The hydrogen storage may act as storage for energy produced by such a renewable energy source.

In yet another embodiment of the system, the actuation of the combustion may be done using a sensor placed along the oxygen supply channel to detect the presence of a cooking utensil on the burner. The sensor may be shielded from the heat and made to work at an optimum temperature.

In yet another embodiment of the system, the hydrogen flame may be used to heat a coil that could hence radiate heat for more spread out cooking. The hydrogen supply to the radiator may be regulated by the temperature within the radiator.

In yet another embodiment of the system, the heat absorbed by the catalyst mesh may be used to generate electric power, increasing the net efficiency of the system.

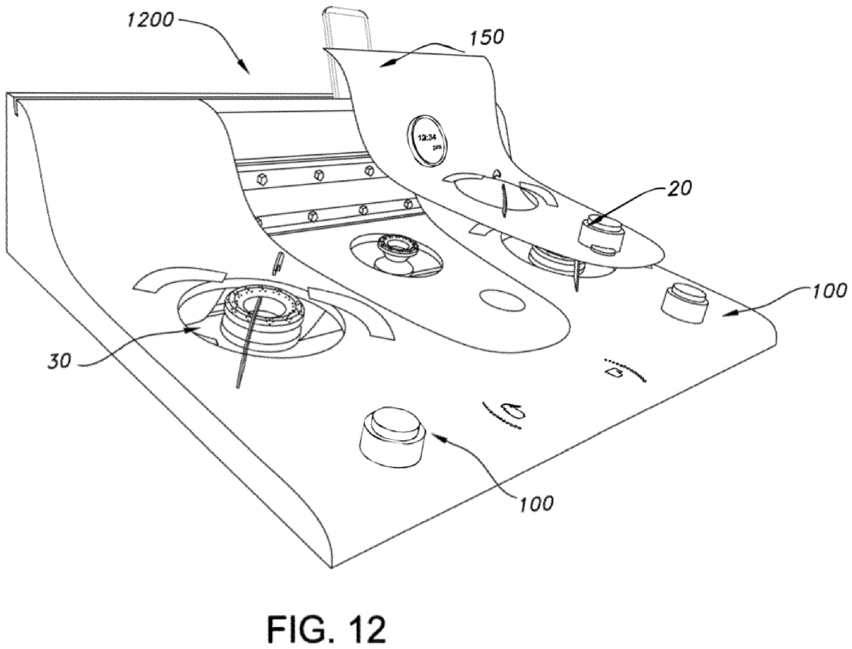

The hydrogen production system may be integrated into a cooking system 1200 as depicted in Fig. 12, which may include smart cooking system comprising a microcontroller with basic sensors, such as gyro, accelerometer, temperature and humidity. Other sensors like weight, additional temperature sensors, pressure sensors, and the like may be mounted on the cooking system and, based upon various inputs from the user and the system (including optional remote control), the actuators may control the cooking temperature, time and other cooking functions.

A speaker may sometimes be used to read out the output or simply play music.

The microcontroller may also be interfaced with a display and touch interface.

The microcontroller may be connected with the cloud, where information regarding recipes, weight and temperature, and the like may be stored and accessed by the controller. The microcontroller may also provide information on the user's cooking patterns.

In an embodiment, smart system configuration, control, and cooking algorithms may be executed by computers (e.g., in the cloud) to process all gathered and sensed information, optionally providing a recommendation related to the operation to the end user. The recommendation may include suggesting suitable recipes, auto turning of the heat in the burner, and the like. The microcontroller may communicate via Bluetooth low energy ("BLE"), Wi-Fi and/or lowaran, or the like, such as to ensure connectivity to the cloud. Lowaran is a wireless network that leverages long-range radio signals for communicating between IoT devices and cloud devices via a central server. The microcontroller may be designed in such a way that it has enough processing power to connect to other IoT devices that may have little or no processing power and also do processing for these IoT devices to give the end user a smart and intelligent, all in one, smart home solution.

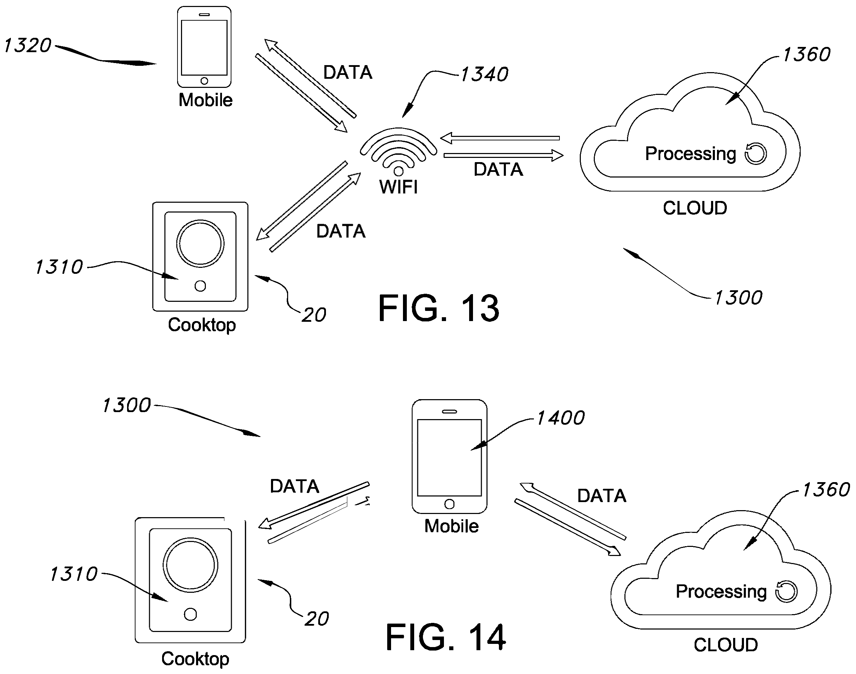

Fig. 13 and Fig. 14 depict auto-switching connectivity 1300 in the form of ad hoc Wi-Fi from a cooktop 1310 through nearby mobile devices 1320 may be performed in the event of non- availability of a common home Wi-Fi router 1340 to ensure cloud connectivity 1360 whenever possible. Fig. 13 depicts a normal connectivity mode when Wi-Fi 1340 is available. Fig. 14 depicts ad hoc use of local mobile devices 1400 for connectivity to the cloud 1360.

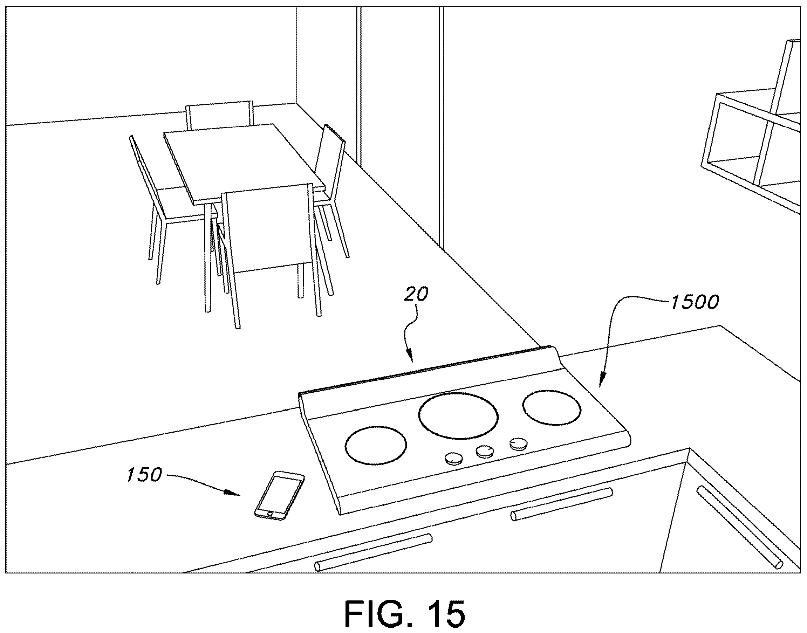

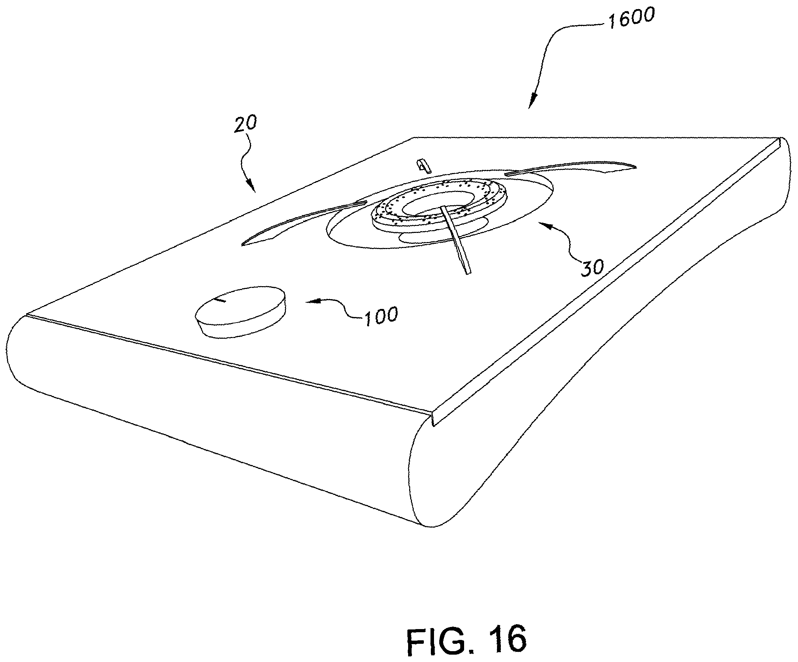

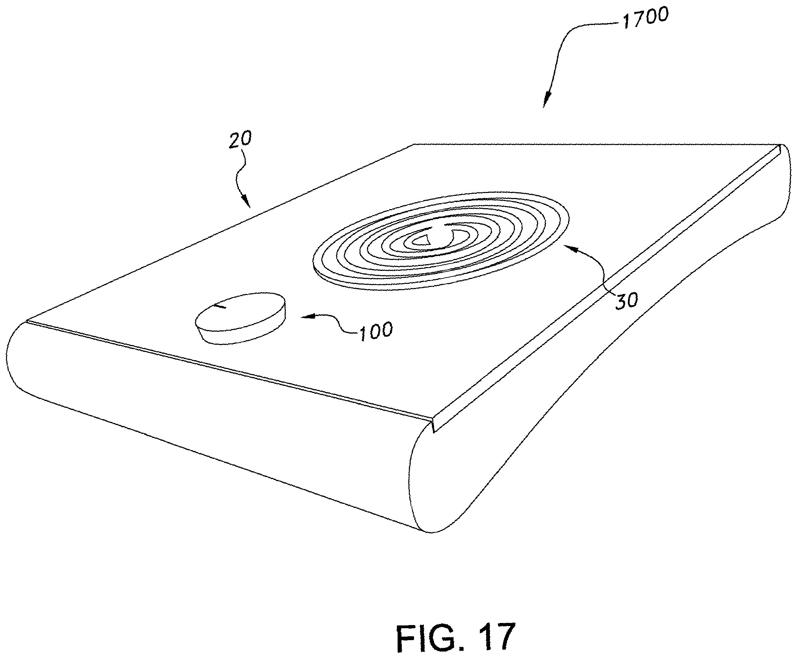

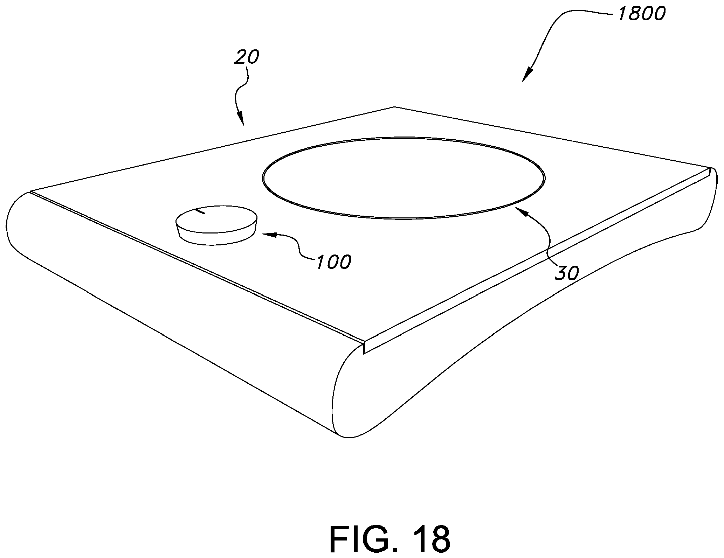

Additional smart cooking system features and capabilities may include weight sensors for each heating element that, when combined with cooking learning algorithms, may control fuel consumption to minimize overcooking and waste of fuel. This may also benefit configurations that employ multiple heating elements, so that unused heating elements do not continue to operate and waste fuel. Fig. 15 depicts a three-element induction smart cooking system 1500. Heating elements may be gas-based or may alternatively include heating with induction, electric hot plate, electric coil, halogen lamp, and the like. Fig. 16 depicts a single burner gas smart cooking system 1600. Fig. 17 depicts an electric hot plate (coil) smart cooking system 1700. Fig. 18 depicts a single induction heating element smart cooking system 1800.

Another embodiment of smart cooking technology described herein may be an intelligent, computerized knob, dial, slider, or the like suitable for direct use with any of the cook tops, probes, single burner elements, and the like described herein. Such a smart knob 2000 may include all electronics and power necessary for independent operation and control of the smart systems described herein. References to a smart knob 2000 should be understood to encompass knobs, dials, sliders, toggles and other physical user interface form factors that are conventionally used to control temperature, timing and other factors involved in heating, cooking, and the like, where any of the foregoing are embodied with a processor and one or more other intelligent features.

The smart knob 2000 may include an embodiment with a digital actuator, such as for electric-based cooking systems and another embodiment with a mechanical actuator, such as for gas models. The smart knob 2000 may be designed with portability and functionality in mind. The knob may include a user interface (e.g., display, audio output, and the like) through which it may provide users step-by-step recipes, and the like. The smart knob 2000 can operate wirelessly, so that it can set alarms and also monitor the operation of a plurality of smart cooking systems 20 even if it is removed from the cooking system actuator. The smart knob 2000 may, in embodiments, store information that allows it to interface with different kinds of cooking systems, such as by including programs and instructions for forming a handshake (e.g., by Bluetooth^{™} or the like) with a cooking system to determine what control protocol should
be used for the cooking system, such as one that may be managed remotely, such as in a cloud or other distributed computing platform. In embodiments, a user may bring the smart knob 2000 in proximity to the cooking system 20, in which case a handshake may be initiated (either under user control or automatically), such that the smart knob 2000 may recognize the cooking system 20 and either initiate control based on stored instructions on the knob 2000 or initiate a download of appropriate programming and control instructions for the cooking system 20 from a remote source, such as a cloud or other distributed computing platform to which the knob 2000 is connected. Thus, the knob 2000 serves as a universal remote controller for a variety of cooking systems, where a user can initiate control using familiar motions, such as turning a dial to set a timer or temperature setting, moving a toggle or slider up or down, setting a timer, or the like. In embodiments, a plurality of knobs 2000 may be provided that coordinate with each other to control a single burner or heating element or a collection of burners or heating elements. For example, one of the knobs 2000 in a pair of knobs might control temperature of a burner or heating element, while a second knob in the pair might control timing for the heating.

In embodiments, the smart knob 2000 may be used to embody complex protocols, such as patterns of temperatures over time, such as suitable for heating an item to different temperatures over time. These may be stored as recipes, or the like, so that a user can simply indicate, via the knob 2000, the desired recipe, and the knob 2000 will automatically initiate control of a burner or heating element to follow the recipe.

A user may use the smart knob 2000 with an induction cooking system for controlling the temperature of a cooking system, such as an induction stove, providing step-by-step instructions, and the like. The user may, for example, switch to cooking with a gas burner-based smart cooking system by simply taking the smart knob 2000 off of the induction cooking system, configuring it to operate the gas burner cooking system (such as by initiating an automated handshake), and mounting the knob 2000 in a convenient place, such as countertop, wall, refrigerator door, and the like. It should be noted that while the knob 2000 may be placed on the cooking system, once a connection has been established, such as by Bluetooth^{™}, near-field communication ("NFC"), Wi-Fi, or by programming, the knob 2000 may be placed at any convenient location, such as on the person of a user (such as where a user is moving from place to place in an industrial environment), on a dashboard or other control system that controls multiple devices, or on another object. The knob 2000 may be provided with alternative
interfaces for being disposed, such as clips for attachment to objects, hook-and-loop fasteners, magnetic fasteners, and physical connectors.

The smart knob 2000 can use, include or control the various features of the smart cooking systems 20 described throughout this disclosure. Additionally, the smart knob 2000 can be connected to other IoT devices, such as smart doorbell, remote temperature probe (e.g., in a refrigerator or freezer), and the like. The smart knob 2000 can be used for kitchen tasks other than cooking. By connecting with a temperature probe, the smart knob 2000 can be used to inform a user of the progress of an item placed in the refrigerator or freezer to cool down.

As it requires only very little power and as it is mountable on the smart cooking system 20, the smart knob 2000 may, in embodiments, be recharged through thermoelectric conversion of the heat from a burner on the cooking system 20, so that the use of external power supply is not required.

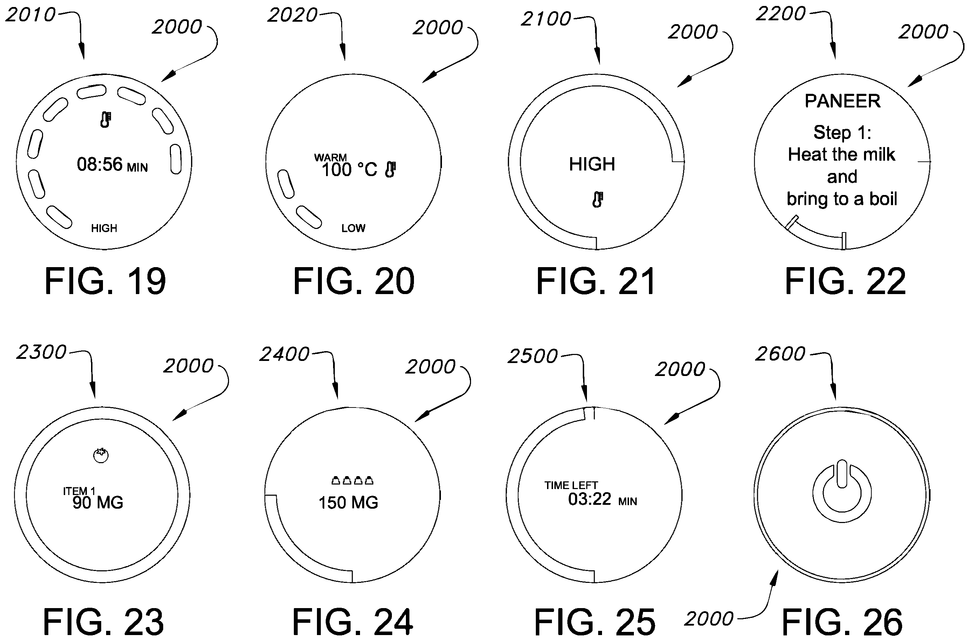

Figs. 19-26 depicts a variety of user interface features 2010, 2020, 2100, 2200, 2300, 2400, 2500, 2600 of the smart knob 2000.

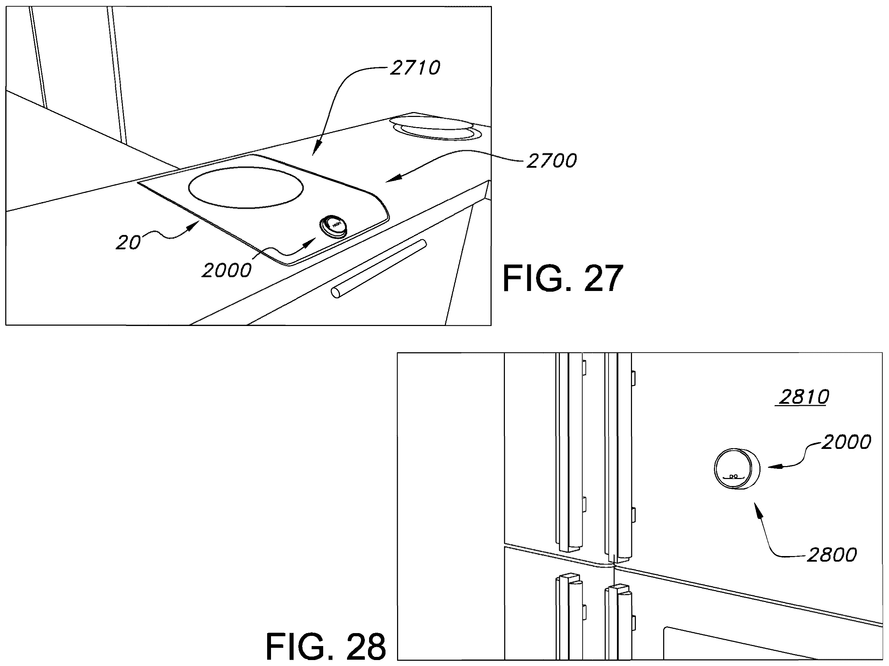

Fig. 27 depicts a smart knob 2700 deployed on a single heating element cooking system 2710, while Fig. 28 depicts a smart knob 2800 placed on a side of a kitchen appliance 2810.

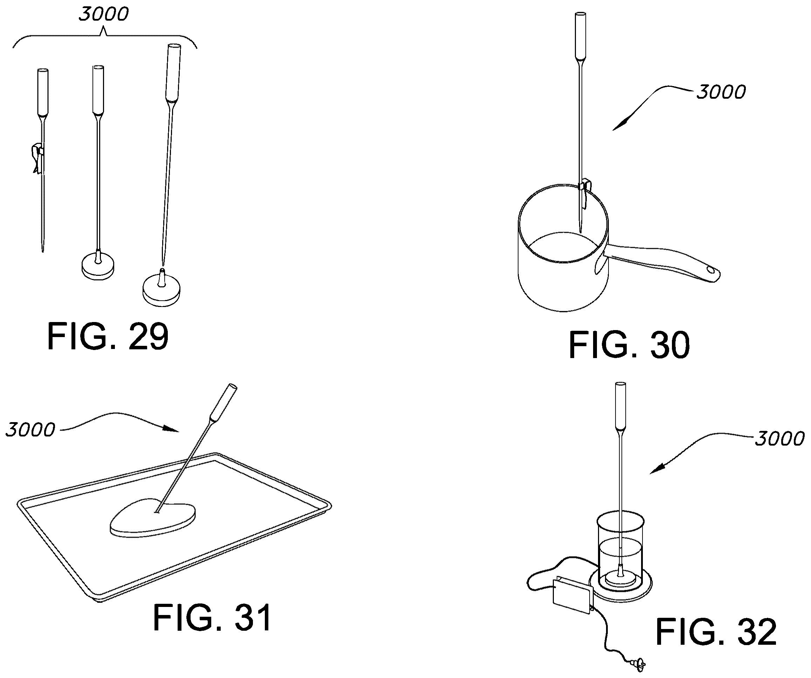

Other features of a smart cooking system 20 may include examples of smart temperature probes 3000 depicted in Figs. 29-32. The temperature probe 3000 may consist of a wired or wireless temperature sensor that can be interfaced with a smart cooking system 20, smart knob 2000, and/or a mobile phone 150 for cooking. The temperature probe 3000 can, in embodiments, be dipped into a liquid (such as a soup, etc.) or inserted interior of a solid (such as a piece of meat or a cooking baked good), to cook very precisely based on the measured interior temperature of the liquid or solid. Also the smart temperature probe 3000 can facilitate use of an induction base to control the temperature of the base for heating water to a precise temperature (e.g., for tea) with any type of non-magnetic cooking vessel.

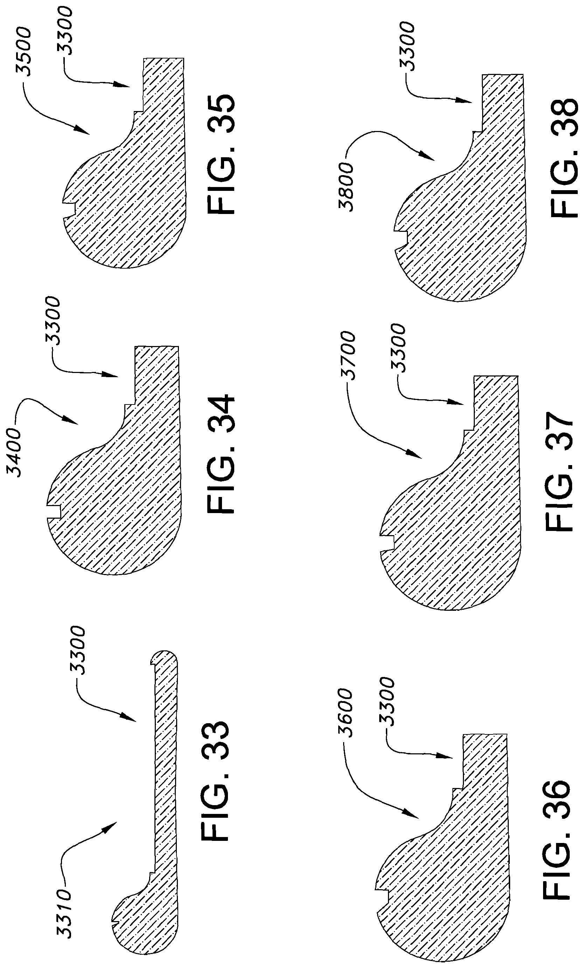

The smart cooking system 20 may include a smart phone docking station 3300 that may be configured to prevent cooking heat from directly impacting a device in the station while facilitating easy access to the phone for docking, undocking and viewing. A variety of different docks 3310, 3400, 3500, 3600, 3700, 3800 for compatibility with a range of smart phone and tablet devices are depicted in Figs. 33-38.

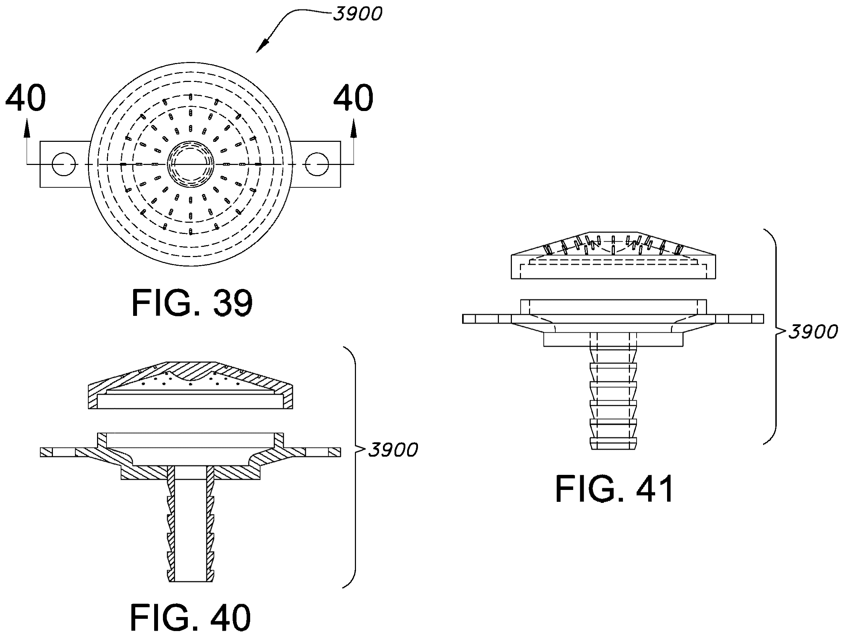

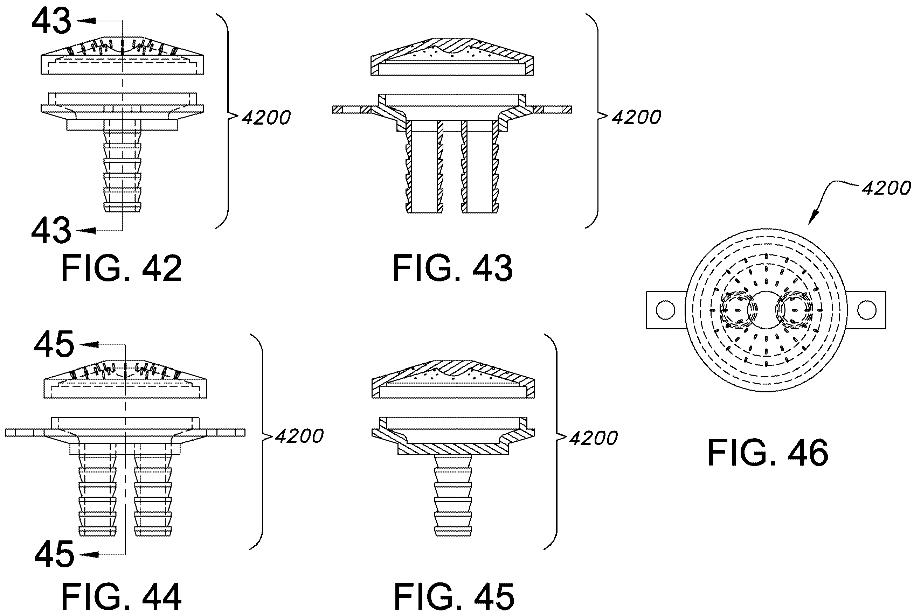

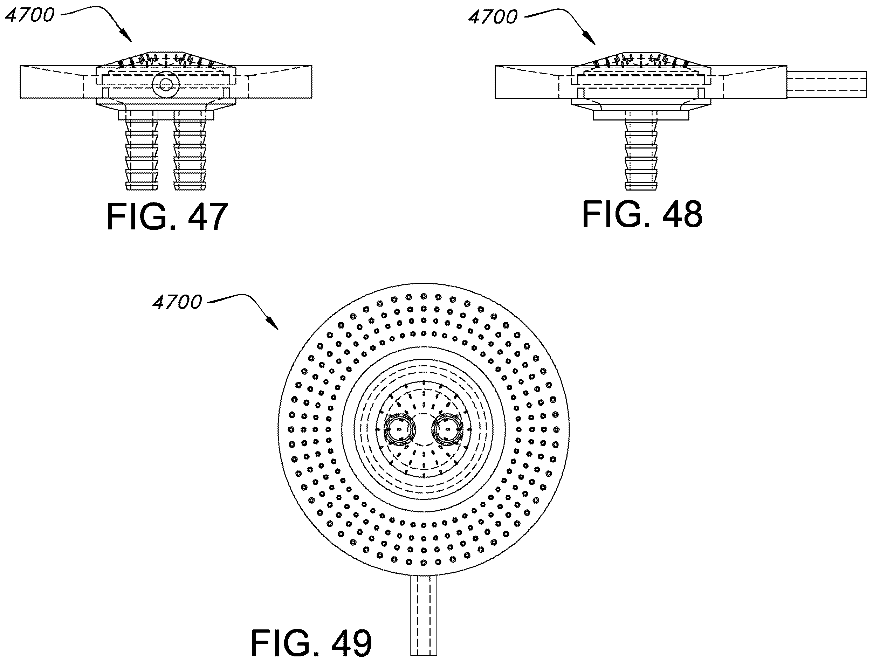

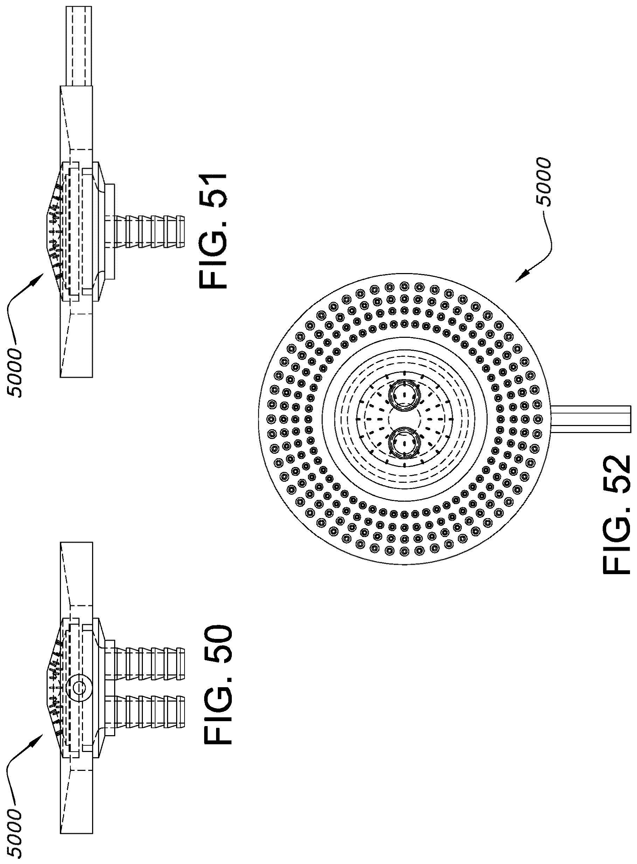

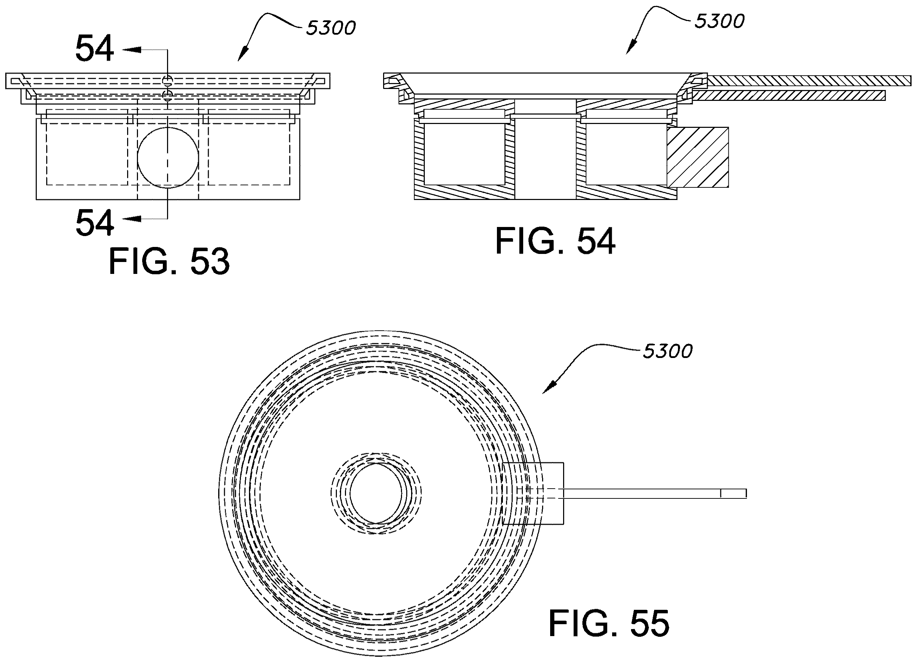

Various burner designs are contemplated for use with a smart cooking system as described herein. Figs. 39-55 depict exemplary burners 3900, 4200, 4700, 5000, 5300.

The Internet-connected smart cooking system 20 described herein may include tools and features that can help a user, such as a homemaker, a commercial chef, or cook in an industrial environment to prepare healthier meals, learn about food choices of other users, facilitate reduced meal preparation time, and repeatable cooking for improved quality and value. A few applications that can leverage the capabilities of the present Internet-connected smart cook top may include a fitness application that helps one estimate daily calorie consumption requirements for each member of a user' s family or other person for whom the user may prepare meals. This may help a user to control and track the user's family fitness over time. Using data from recipes and weight sensors for pots/pans used to cook the food for the recipes, a fitness application may generate a calorie consumption estimate and suggest one or more healthy alternative recipes. Through combining sensing and control of the cook top functionality (e.g., burners) with Internet access to food nutrition and weight values for recipe ingredients being cooked, the calorie count of a content of a pan placed on a smart cook top burner can be estimated. As an example, if a recipe calls for ¼ cup of lentils per serving combined with a serving-unit of water, a total weight of a pan being used to prepare the lentils can be sensed. By knowing the weight of the pan, a net weight of the ingredients in the pan can be calculated so that a number of servings in the pan can be determined by calculating the total weight and dividing it by a weight per serving. By accessing recipe comparison tools (e.g., as may be available via resources on the Internet) that may include lists of corresponding meals that have lower fat, higher nutritional ingredients, alternate recipes could be suggested to the user that would provide comparable nutrition with lower calories or fat, for example.

A food investigation application may gather information from the smart cook tops and user activity about recipes being used by users of the smart cook top systems throughout a region (e.g., a country such as India) to calculate various metrics, such as most often cooked recipe, preferred breakfast meal, popular holiday recipes, and the like. This information may be useful in planning purposes by food suppliers, farmers, homeowners, and the like. As an example, on any given day, information about the recipes that people in your region are preparing might be useful in determining which dishes are trending. An Internet-based server that receives recipe and corresponding limited demographic information over time may determine which meals are trending. A count of all uses of all recipes (or comparable recipes) during a period of time (e.g., during evening meal preparation time) can be calculated and the recipes with the greatest use counts could be identified as most popular, currently trending, and the like.

Cooking becomes more repeatable so a cook (e.g., a less experienced cook) can rely on the automation capabilities of an Internet-connected smart cook top system to avoid mistakes, like overcooking, burning due to excessive heat, and the like. This may be possible due to use of information about the items being cooked and the cooking environment, such as the caloric output value of each burner in any heat output setting, the weight of the food being cooked, target temperature and cooking time (e.g., from a recipe), a selected doneness of the food, and the like. By combining this information with modeled and/or sensed burner operation (e.g., temperature probes may be used to detect the temperature of the food being cooked, the temperature of the cooking environment, and the like) to facilitate automated control of heat, temperature, and cooking time thereby making meal cooking repeatable and predictable. Each type of burner (e.g., induction, electric, LP gas, hydrogen gas, and the like) can each be fully modeled for operational factors so that cooking a recipe with induction heating today and with hydrogen gas heat tomorrow will produce repeatable results. Similar capabilities to combine information from the cooking system and information from sensors or other systems may be used to improve repeatability and improvement of industrial processes, such as manufacturing processes that produce materials and components through heating, drying, curing, and the like.

While only a few embodiments of the present disclosure have been shown and described, it will be obvious to those skilled in the art that many changes and modifications may be made. The scope of the invention is defined in the appended claims.

## Claims

1. An industrial cooking system (20) for providing heat in a manufacturing process, comprising:
an electrolyser (700) for producing hydrogen fuel from water;
at least one burner for using the hydrogen fuel; and
a processor for controlling the at least one burner such that the at least one burner is adapted to use the hydrogen fuel under control of the processor;
wherein the processor is connected to a network to enable communication to a server, the server having at least one module for providing at least one of monitoring or control of the operation of the system (20); and
wherein the electrolyser (700) is adapted to generate the hydrogen fuel under control of a processor and responsive to an indication of processor controlled use of the hydrogen fuel by the at least one burner.

2. The system (20) of claim 1, further comprising a low-pressure hydrogen storage system (360, 380, 400) for storing the hydrogen fuel produced by the electrolyser (700).

3. The system (20) of any of claims 1-2, further comprising a renewable energy system for powering the electrolyser (700) to produce the hydrogen fuel.

4. The system (20) of any of claims 1-3, further comprising:
a liquid propane fuel system for providing a liquid propane fuel to the system (20); and wherein the system includes a fuel control module in operative connection with the processor to control the use of the at least one of the liquid propane fuel or the hydrogen fuel for use by the at least one burner.

5. The system (20) of any of claims 1-4, further comprising at least one interface configured to facilitate a system external to at least one of monitoring the system (20), controlling the system (20), or obtaining data collected by the system (20) via interaction with the server.

6. The system (20) of any of claims 1-5, further comprising at least one sensor including at least one of a temperature sensor, a weight sensor, a pressure sensor, or a gyro-based sensor.

7. The system (20) of any of claims 1-6, wherein the processor is configured to control the electrolyser (700) by signalling to the electrolyser (700) a demand for the hydrogen fuel such that the electrolyser (700) directs at least one of storing the hydrogen fuel, producing the hydrogen fuel, or indicating the hydrogen fuel as not currently available.

8. The system (20) of any of claims 1-7, wherein the system is configured to produce materials and components through at least one of heating, drying, curing, or treating in a manufacturing process.

9. The system (20) of any of claims 1-9, wherein the electrolyser (700) is configured to produce the hydrogen fuel rather than sourcing the hydrogen fuel from storage based on a contemporaneous demand for the hydrogen fuel and the ability to produce the hydrogen fuel is combined to determine an operation of energy production and consumption.

10. The system (20) of any of claims 1-9, further comprising a fuel mixing device that is controlled automatically based on, at least in part, at least one of historical consumption, historical availability, current consumption, current availability, planned consumption, planned availability, anticipated consumption, or anticipated availability.

11. The system (20) of any of claims 1-10, further comprising a device for converting the hydrogen fuel to produce electricity.

12. The system (20) of any of claims 1-11, further comprising a low-pressure storage for storing the hydrogen fuel as a source of energy that is converted into electricity.

13. The system (20) of any of claims 1-12, wherein the processor is disposed in a housing of a knob such that a user's interaction with the knob is converted to a control message to control the at least one burner.

## Patentansprüche

1. Industrielles Kochsystem (20) zum Bereitstellen von Wärme in einem Herstellungsprozess, umfassend:
einen Elektrolyseur (700) zum Erzeugen von Wasserstoffbrennstoff aus Wasser;
mindestens einen Brenner zur Verwendung des Wasserstoffbrennstoffs; und
einen Prozessor zum Steuern des mindestens einen Brenners, so dass der mindestens eine Brenner zur Verwendung des Wasserstoffbrennstoffs unter Steuerung des Prozessors ausgelegt wird;
wobei der Prozessor mit einem Netzwerk verbunden ist, um eine Kommunikation mit einem Server zu ermöglichen, wobei der Server mindestens ein Modul zum Bereitstellen einer Überwachung und/oder einer Steuerung des Betriebs des Systems (20) aufweist; und
wobei der Elektrolyseur (700) ausgelegt ist, um den Wasserstoffbrennstoff unter Steuerung eines Prozessors und in Reaktion auf eine Angabe einer prozessorgesteuerten Verwendung des Wasserstoffbrennstoffs durch den mindestens einen Brenner zu erzeugen.

2. System (20) nach Anspruch 1, ferner umfassend ein Niederdruck-Wasserstoffspeichersystem (360, 380, 400) zum Speichern des Wasserstoffbrennstoffs, der von dem Elektrolyseur (700) erzeugt wird.

3. System (20) nach einem der Ansprüche 1-2, ferner umfassend ein System für erneuerbare Energien zum Betreiben des Elektrolyseurs (700), um den Wasserstoffbrennstoff zu erzeugen.

4. System (20) nach einem der Ansprüche 1-3, ferner umfassend:
ein Flüssigpropanbrennstoffsystem zum Bereitstellen von Flüssigpropanbrennstoff an das System (20); und wobei das System ein Brennstoffsteuermodul in Wirkverbindung mit dem Prozessor umfasst, um die Verwendung des Flüssigpropanbrennstoffs und/oder des Wasserstoffbrennstoffs zur Verwendung durch den mindestens einen Brenner zu steuern.

5. System (20) nach einem der Ansprüche 1-4, ferner umfassend mindestens eine Schnittstelle, die eingerichtet ist, um ein System außerhalb eines Überwachens des Systems (20), eines Steuerns des Systems (20) und/oder eines Erhaltens von Daten, die von dem System (20) gesammelt wurden, über eine Interaktion mit dem Server zu unterstützen.

6. System (20) nach einem der Ansprüche 1-5, ferner umfassend mindestens einen Sensor, der einen Temperatursensor, einen Gewichtssensor, einen Drucksensor und/oder einen gyrobasierten Sensor umfasst.

7. System (20) nach einem der Ansprüche 1-6, wobei der Prozessor eingerichtet ist, um den Elektrolyseur (700) zu steuern, indem er dem Elektrolyseur (700) eine Nachfrage nach dem Wasserstoffbrennstoff signalisiert, so dass der Elektrolyseur (700) ein Speichern des Wasserstoffbrennstoffs, ein Erzeugen des Wasserstoffbrennstoffs und/oder ein Angeben des Wasserstoffbrennstoffs als derzeit nicht verfügbar veranlasst.

8. System (20) nach einem der Ansprüche 1-7, wobei das System eingerichtet ist, um Materialien und Komponenten durch Erhitzen, Trocknen, Aushärten und/oder Behandeln in einem Herstellungsprozess zu erzeugen.

9. System (20) nach einem der Ansprüche 1-9, wobei der Elektrolyseur (700) eingerichtet ist, um den Wasserstoffbrennstoff zu erzeugen, anstatt den Wasserstoffbrennstoff aus einem Speicher zu beziehen, basierend auf einer gleichzeitigen Nachfrage nach dem Wasserstoffbrennstoff, und die Fähigkeit, den Wasserstoffbrennstoff zu erzeugen, kombiniert wird, um einen Betrieb einer Energieerzeugung und eines Energieverbrauchs zu bestimmen.

10. System (20) nach einem der Ansprüche 1-9, ferner umfassend eine Brennstoffmischvorrichtung, die zumindest teilweise automatisch basierend auf einem vergangenen Verbrauch, einer vergangenen Verfügbarkeit, einem aktuellen Verbrauch, einer aktuellen Verfügbarkeit, einem geplanten Verbrauch, einer geplanten Verfügbarkeit, einem erwarteten Verbrauch und/oder einer erwarteten Verfügbarkeit gesteuert wird.

11. System (20) nach einem der Ansprüche 1-10, ferner umfassend eine Vorrichtung zum Umwandeln von Wasserstoffbrennstoff, um Elektrizität zu erzeugen.

12. System (20) nach einem der Ansprüche 1-11, ferner umfassend einen Niederdruckspeicher zum Speichern des Wasserstoffbrennstoffs als Energiequelle, die in Elektrizität umgewandelt wird.

13. System (20) nach einem der Ansprüche 1-12, wobei der Prozessor in einem Gehäuse eines Knopfes angeordnet ist, so dass eine Interaktion eines Benutzers mit dem Knopf in eine Steuernachricht umgewandelt wird, um den mindestens einen Brenner zu steuern.

## Revendications

1. Système de cuisson industriel (20) pour fournir de la chaleur dans un processus de fabrication, comprenant :
un électrolyseur (700) pour produire du combustible hydrogène à partir d'eau ;
au moins un brûleur pour utiliser le combustible hydrogène ; et
un processeur pour contrôler ledit au moins un brûleur de telle sorte que ledit au moins un brûleur soit adapté pour utiliser le combustible hydrogène sous le contrôle du processeur ;
dans lequel le processeur est connecté à un réseau pour permettre une communication avec un serveur, le serveur ayant au moins un module pour fournir au moins une fonction de surveillance ou de contrôle du fonctionnement du système (20) ; et
dans lequel l'électrolyseur (700) est adapté pour générer le combustible hydrogène sous le contrôle d'un processeur et en réponse à une indication d'utilisation contrôlée par le processeur du combustible hydrogène par ledit au moins un brûleur.

2. Système (20) selon la revendication 1, comprenant en outre un système de stockage d'hydrogène à basse pression (360, 380, 400) pour stocker le combustible hydrogène produit par l'électrolyseur (700).

3. Système (20) selon l'une quelconque des revendications 1 et 2, comprenant en outre un système d'énergie renouvelable pour alimenter l'électrolyseur (700) afin de produire le combustible hydrogène.

4. Système (20) selon l'une quelconque des revendications 1 à 3, comprenant en outre :
un système à combustible propane liquide pour fournir un combustible propane liquide au système (20) ; et dans lequel le système inclut un module de contrôle de combustible en connexion opérationnelle avec le processeur pour contrôler l'utilisation dudit au moins un combustible parmi le propane liquide et l'hydrogène pour son utilisation par ledit au moins un brûleur.

5. Système (20) selon l'une quelconque des revendications 1 à 4, comprenant en outre au moins une interface configurée pour assister la mise en œuvre, par un système externe, d'au moins une fonction parmi la surveillance du système (20), le contrôle du système (20) et l'obtention de données collectées par le système (20), via une interaction avec le serveur.

6. Système (20) selon l'une quelconque des revendications 1 à 5, comprenant en outre au moins un capteur incluant au moins un capteur parmi un capteur de température, un capteur de poids, un capteur de pression et un capteur gyroscopique.

7. Système (20) selon l'une quelconque des revendications 1 à 6, dans lequel le processeur est configuré pour contrôler l'électrolyseur (700) en signalant à l'électrolyseur (700) une demande de combustible hydrogène de telle sorte que l'électrolyseur (700) commande au moins une opération parmi le stockage du combustible hydrogène, la production du combustible hydrogène et une indication d'indisponibilité actuelle du combustible hydrogène.

8. Système (20) selon l'une quelconque des revendications 1 à 7, dans lequel le système est configuré pour produire des matériaux et des composants via au moins une opération parmi une chauffe, un séchage, un durcissement et un traitement dans un processus de fabrication.

9. Système (20) selon l'une quelconque des revendications 1 à 9, dans lequel l'électrolyseur (700) est configuré pour produire le combustible hydrogène plutôt que de prélever le combustible hydrogène dans un stockage sur la base de la demande actuelle de combustible hydrogène, et la capacité de produire le combustible hydrogène est combinée pour déterminer une opération de production et de consommation d'énergie.

10. Système (20) selon l'une quelconque des revendications 1 à 9, comprenant en outre un dispositif de mélange de combustible qui est contrôlé automatiquement sur la base, au moins en partie, d'au moins un élément parmi l'historique de consommation, l'historique de disponibilité, la consommation actuelle, la disponibilité actuelle, la consommation planifiée, la disponibilité planifiée, la consommation anticipée et la disponibilité anticipée.

11. Système (20) selon l'une quelconque des revendications 1 à 10, comprenant en outre un dispositif de conversion du combustible hydrogène pour produire de l'électricité.

12. Système (20) selon l'une quelconque des revendications 1 à 11, comprenant en outre un stockage basse pression pour stocker le combustible hydrogène en tant que source d'énergie qui est convertie en électricité.

13. Système (20) selon l'une quelconque des revendications 1 à 12, dans lequel le processeur est disposé dans le boîtier d'un bouton de telle sorte qu'une interaction d'un utilisateur avec le bouton est convertie en un message de contrôle pour contrôler ledit au moins un brûleur.
